# EUROPEAN PATENT APPLICATION

(11) **EP 4 701 166 A1**
(43) Date of publication of application: **25.02.2026**
(21) Application number: 24851999.3
(22) Date of filing: 12.04.2024
(51) Int. Cl.: H04M 1/02, G06F 1/16, C09J 7/00

(54) **FOLDABLE ELECTRONIC DEVICE INCLUDING HOUSING AND HINGE HOUSING**

(30) Priority: 07.08.2023 KR 20230102875; 08.09.2023 KR 20230119599
(71) Applicant: Samsung Electronics Co., Ltd., Suwon-si, Gyeonggi-do 16677 (KR)
(72) Inventor: LEE, Jihoon, Suwon-si Gyeonggi-do 16677 (KR)
(74) Representative: Gulde & Partner
(86) International application number: PCT/KR2024/004887
(87) International publication number: WO 2025/033640

(57) **Abstract**

A foldable electronic device may include a first housing, a second housing, at least one hinge structure that connects the first housing and the second housing, a flexible display that is positioned on the first housing, the second housing, and the at least one hinge structure, and a hinge housing in which at least a portion of the at least one hinge structure is seated, and the first housing includes a first protruding structure, at least a portion of which overlaps one side of the hinge housing with respect to a first direction that faces the hinge housing when the foldable electronic device is in a folded state.

## Description

### BACKGROUND

### 1. Field

Certain example embodiments may relate to a foldable electronic device including a hinge housing and a plurality of housings.

### 2. Description of Related Art

A portable electronic device, such as a smartphone, may support call functions and various content searching and providing functions based on various types of applications. The portable electronic device may output a screen corresponding to each function in a process of providing various functions. When the user uses the above-described various functions, the user may want to use a wider screen. In a general portable electronic device, when it is intended to expand a display device for displaying a screen, an overall size thereof increases, so that portability may deteriorate. Accordingly, a foldable portable electronic device has been provided so that the size of the screen may be increased while maintaining portability. The foldable portable electronic device can have folded and unfolded states. In the process of using a foldable electronic device, a user may frequently drop the foldable electronic device unintentionally, and as a result, an impact may be applied to the foldable electronic device. An impact applied to the foldable electronic device may be transmitted not only to a housing of the foldable electronic device but also to an internal structure, which may damage the internal structure.

### SUMMARY

A foldable electronic device (e.g., a portable electronic device, a portable communication device, a foldable electronic device, or a foldable electronic device having a communication function) according to an example embodiment may include a first housing, a second housing, at least one hinge structure that connects the first housing and the second housing, a flexible display positioned on the first housing, the second housing, and the at least one hinge structure, and a hinge housing on which at least a portion of the at least one hinge structure is seated, and the first housing may include a first protruding structure, at least a portion of which overlaps one side of the hinge housing with respect to a first direction that faces the hinge housing when the foldable electronic device is in a folded state.

A foldable electronic device (e.g., a portable electronic device, a portable communication device, a foldable electronic device, or a foldable electronic device having a communication function) according to various example embodiments may include a first housing, a second housing, at least one hinge structure that connects the first housing and the second housing, a flexible display positioned on the first housing, the second housing, and the at least one hinge structure, a hinge housing on which at least a portion of the at least one hinge structure is seated, a protective member disposed at at least one of opposite peripheries of the hinge housing, and a first protruding structure that protrudes toward an inner surface of the first housing through a member hole formed in the protective member, and when the foldable electronic device is in a folded state, at least a portion of the first protruding structure may overlap one side of the hinge housing with respect to a first direction that faces the hinge housing.

In addition, the disclosure provides various embodiments.

### BRIEF DESCRIPTION OF THE DRAWINGS

FIG. 1 is a view illustrating an example of an external appearance of a foldable electronic device according to an example embodiment in a folded state;
FIG. 2 is an exploded perspective view of a foldable electronic device according to an example embodiment;
FIG. 3 is a view illustrating an example of shapes of a hinge housing and housings of a foldable electronic device according to an example embodiment;
FIG. 4 is a view illustrating a cross-section, taken along cutting line A-A' of FIG. 3; and
FIG. 5 is a view illustrating an example of a hinge housing and housings of an electronic device according to an example embodiment in a folded state;
FIG. 6 is a view illustrating an example of a hinge housing and housings of an electronic device according to an example embodiment in an unfolded state;
FIG. 7 is a view illustrating an example of portions of a first housing and a second housing in a folded state according to an example embodiment;
FIG. 8 is a view illustrating an example of portions of a first housing and a second housing in an unfolded state according to an example embodiment;
FIG. 9 is a view illustrating some components of a foldable electronic device according to an example embodiment in an unfolded state;
FIG. 10 is a view illustrating an example of a cross-section, taken along cutting lines of FIG. 9; and
FIG. 11 is a view illustrating an example of axis relationships of a foldable electronic device according to an example embodiment;
FIG. 12 is a view illustrating an example of a relationship of rotation axes and peripheral structures according to an example embodiment;
FIG. 13 is a view illustrating a first modified example of a hinge housing and housings of a foldable electronic device according to an example embodiment;
FIG. 14 is a view illustrating an example of a cross-section, taken along cutting line A1-A1' of FIG. 13; and
FIG. 15 is a view illustrating a second modified example of a hinge housing and housings of a foldable electronic device according to an example embodiment;
FIG. 16 is a view illustrating an example of a cross-section, taken along cutting line A2-A2' of FIG. 15.
FIG. 17 is a view illustrating a third modified example of a hinge housing and housings of a foldable electronic device according to an example embodiment;
FIG. 18 is a view illustrating an example of another form of a foldable electronic device according to an example embodiment; and
FIG. 19 is a view illustrating an example of still another form of a foldable electronic device according to an example embodiment.
FIG. 20 is a block diagram illustrating an electronic device in a network environment according to various example embodiments.

### DETAILED DESCRIPTION

Hereinafter, various example embodiments of the disclosure may be described with reference to accompanying drawings.

Hereinafter, various embodiments of the disclosure propose a structure, in which a protruding structure (or a support area, a support part, a protrusion, a support rib, or a holding part) is provided at at least a portion of a housing (or a case, a frame, or a bracket) and a hinge housing, so that an interval between the housing and the hinge housing may be maintained when an external impact is applied. Various embodiments of the disclosure may improve (or prevent, or reduce chances of) damage to an internal structure by preventing or reducing chances of the hinge housing from entering an inside of the housing by a specific distance or more by a support area provided on one side of the housing when an external impact is applied to the hinge housing. As an example, when a foldable electronic device supports an electronic pen, the foldable electronic device according to an embodiment may prevent or reducing chances of a digitizer component that is disposed adjacent to a display from colliding with a hinge housing when an external impact occurs, and also may prevent or reduce deformation of the display or deformation of the digitizer. In this way, embodiments of the disclosure propose a hinge structure and peripheral structures that prevent or reduce damage to an internal structure even in an environment in which an impact is applied to a foldable electronic device, or allow the internal structure to respond more firmly to the impact.

The objects according to various embodiments of the disclosure will be described as necessary in a process of describing the embodiments.

In addition, various purposes and effects provided by the foldable electronic device including a hinge structure according to various embodiments may be mentioned according to embodiments of the detailed description.

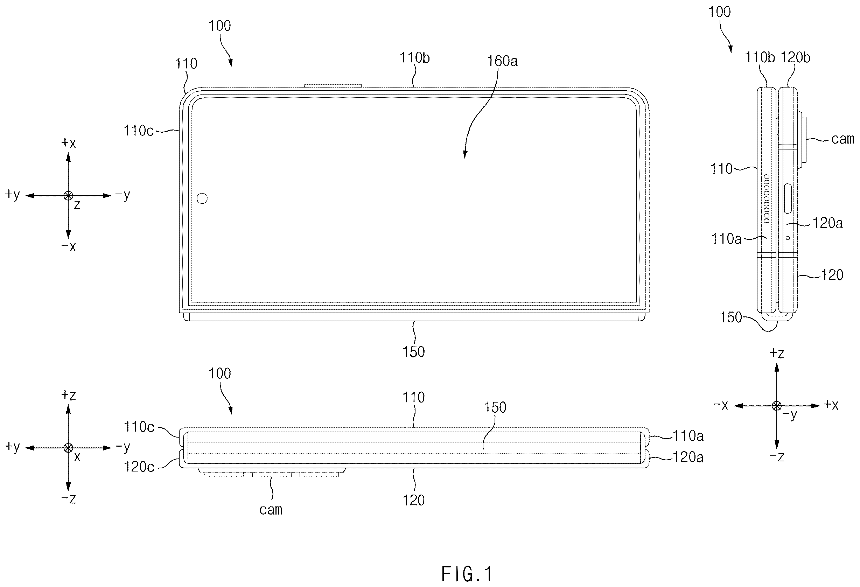

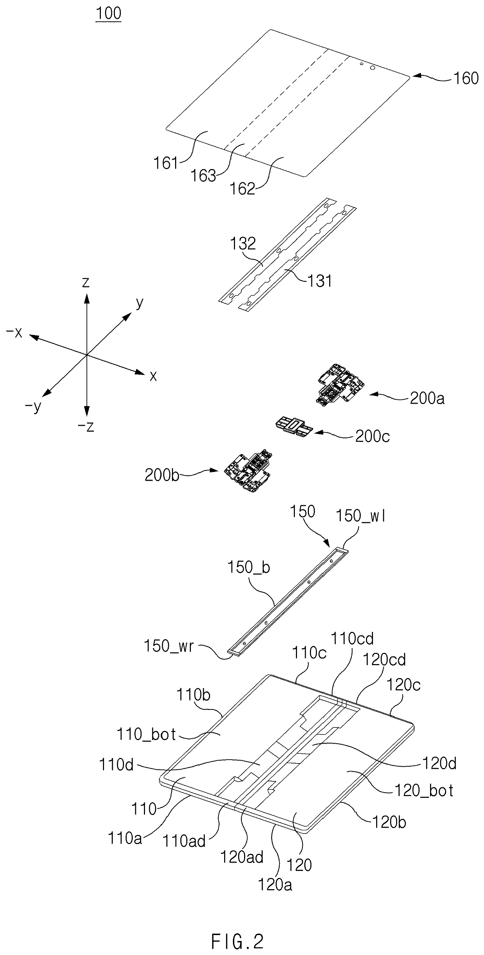

FIG. 1 is a view illustrating an example of an external appearance of a foldable electronic device according to an embodiment in a folded state. FIG. 2 is an exploded perspective view of a foldable electronic device according to an embodiment.

Referring to FIGS. 1 and 2, a foldable electronic device 100 (or an electronic device, a portable electronic device, a portable communication device, or a portable device) according to an embodiment may include a first housing 110, a second housing 120, a hinge housing 150, wing plates 131 and 132 (or plates), a display 160, and at least one hinge structure 200a, 200b, and 200c. the wing plates 131 and 132 may be removed from the foldable electronic device 100, or may be attached to or integrated with another structure (e.g., a display 160). Additionally or alternatively, the foldable electronic device 100 may further include an auxiliary display 160a and a camera (cam), and may also further include structures related to user functions of the foldable electronic device 100, such as a speaker hole and a connector hole disposed on one side of a housing.

According to an embodiment, in the foldable electronic device 100, in a folded state, at least a portion of a folding area of the display 160 is formed in a waterdrop shape (or in a waterdrop shape or a dumbbell shape that is convex rearward when viewed from a front side to a rear side of the display 160 (e.g., viewed from the z-axis in the -z-axis direction)), so that a folding radius (curvature) that prevents or reduces cracks or buckling from occurring in the folding area of the display 160 may be secured. Furthermore, according to the foldable electronic device 100, the folding area of the display 160 having a dumbbell shape may be disposed in specific spaces of the housings 110 and 120, so that a disposition gap between the housings 110 and 120 may be maintained at a reference value or less or maintained in a 11 shape when the foldable electronic device 100 is in the folded state. According to the foldable electronic device 100 of the above-described structure, at least one support structure may be provided at at least a portion of the housings 110 and 120 and the hinge housing 150, so that the hinge housing 150 may be prevented from being moved to an inside of the housings 110 and 120 while an external impact is applied to the foldable electronic device 100, and thus, damage to an internal structure of the foldable electronic device 100 may be prevented or reduced.

According to an embodiment, the first housing 110 may be connected to the second housing 120 by using at least one hinge structure 200a, 200b, and 200c. The first housing 110 may include a first bottom area 110_bot, in which the display 160 is seated, and sidewalls (e.g., 110a, 110b, and 110c) or a separately provided frame that is disposed at a periphery of the first bottom area 110_bot to surround an edge of the display 160 or a periphery of an area, in which the display 160 is seated. As an example, the first housing 110 may include a first sidewall 110a that is disposed at opposite-side peripheries of a first side portion 110d, which faces the second housing 120, in a direction that is perpendicular to a lengthwise direction of the first side portion 110d, a second sidewall 110b that extends from one end of the first sidewall 110a and is disposed parallel to the first side portion 110d, and a third sidewall 110c that is disposed parallel to the first sidewall 110a at one end of the second sidewall 110b. The first to third sidewalls 110a, 110b, and 110c may be formed to protrude by a height designed advance from a bottom surface of the first bottom area 110_bot upward (e.g., in the z-axis direction). At least a portion of the first side portion 110d may have a recessed shape while having a specific curvature that is downward (e.g., in the -z-axis direction) from a bottom surface of the first bottom area 110_bot so that at least a portion of the hinge housing 150 may be positioned thereon. Additionally, a rear cover may be disposed on a rear surface of the first housing 110. Here, the rear cover may be omitted. At least a portion of the first housing 110 may be adhered to a first area 161 of the display 160. Alternatively, a portion of a periphery of a front surface of the first housing 110 may be adhered to at least a portion of a periphery of the first area 161 of the display 160. In this regard, an adhesive layer may be disposed between a front surface of the first housing 110 and the first area 161 of the display 160.

According to an embodiment, at least a portion of an inner side of the first housing 110 may be provided in a hollow shape (or an empty shape). At least one of at least portions of at least one circuit board, at least one battery, or at least one camera module may be disposed in an interior of the first housing 110. A circuit board and a battery disposed in the first housing 110 may be electrically connected to at least one circuit board and at least one battery disposed in an interior of the second housing 120 through a flexible board (not illustrated). For example, a flexible board (not illustrated) may extend from a partial area of the first housing 110 across the hinge housing 150 to a partial area of the second housing 120. A partial area of the flexible board (not illustrated) may be located in an interior of the hinge housing 150. For example, a processor and a memory may be disposed on a circuit board disposed in the first housing 110.

According to an embodiment, at least a portion of the first housing 110 may be formed of a metallic material, or at least a portion thereof may be formed of a non-metallic material. The first housing 110 may be formed of a material having rigidity of a specific magnitude so as to support at least part of the display 160. In an embodiment, when the foldable electronic device 100 is in the unfolded state, at least a portion of a first side portion 110d of the first housing 110, which faces the second housing 120, may include a recessed portion, at which at least a portion thereof is recessed such that the hinge housing 150 may be disposed therein.

According to an embodiment, the first housing 110 may be connected to at least one hinge structure 200a, 200b, and 200c, and may be rotated clockwise or counterclockwise to be moved from an arbitrary point between the -x-axis and the x-axis to an arbitrary point between the z-axis and the -z-axis by an external pressure applied from outside. In the folded state of the foldable electronic device 100, the first housing 110 may be disposed parallel to the z-axis, or may be disposed parallel to the second housing 120. While the first housing 110 is disposed parallel to the second housing 120 (or when the foldable electronic device 100 is in the folded state), at least a portion of three sidewalls 110a, 110b, and 110c of the first housing 110 (or an edge or a periphery) (e.g., remaining edges except for an edge (e.g., the first side portion 110d) that is adjacent to the second housing 120 in the unfolded state of the foldable electronic device 100) may contact, face, or be disposed to be adjacent to three sidewalls 120a, 120b, and 120c of the second housing 120 (or the remaining edges except for the second side portion 120d that is adjacent to the first side portion 110d of the first housing 110 in the unfolded state of the foldable electronic device 100).

According to an embodiment, in the first housing 110, a support structure may be formed at a portion of at least one of the first sidewall 110a and the third sidewall 110c such that the hinge housing 150 is prevented or reduced from protruding to an interior of the housing while an external impact is applied. As an example, the support structure may be formed in at least one of a first zone 110ad, in which the first sidewall 110a and the first side portion 110d meet each other, and a second zone 110cd, in which the third sidewall 110c and the first side portion 110d meet each other.

According to an embodiment, the second housing 120 may be connected (fastened or coupled) to the first housing 110 through at least one hinge structure 200a, 200b, and 200c. The second housing 120 may include a front surface (or a second bottom area 120_bot), on which at least a portion (e.g., a second area 162) of the display 160 is seated, and a frame that surrounds at least a portion of an edge of the front surface or the second area 162 of the display 160. At least a portion of the second housing 120 may be adhered to the second area 162 of the display 160. Alternatively, a portion of a periphery of a front surface of the second housing 120 may be adhered to a periphery of the second area 162 of the display 160. In this regard, an adhesive layer may be disposed between a front surface of the second housing 120 and the second area 162 of the display 160.

According to an embodiment, similarly to the first housing 110, a hollow may be formed at at least a portion of an interior of the second housing 120. At least one circuit board and at least one battery may be disposed in an interior of the second housing 120. Alternatively, at least one battery may be disposed in any one of the first housing 110 and the second housing 120, or may be disposed in both. At least one of a printed circuit board or a battery disposed in the second housing 120 may be electrically connected to a component (e.g., at least one of a printed circuit board or a battery) disposed in the first housing 110 through a flexible board.

According to an embodiment, similarly to the first housing 110, at least a portion of the second housing 120 may be formed of a metallic material, or at least a portion thereof may be formed of a non-metallic material. The second housing 120 may be formed of a material having rigidity of a specific magnitude so as to support at least part of the display 160. A sidewall structure of the second housing 120 may be formed to correspond to a sidewall structure of the first housing 110. In an embodiment, when the foldable electronic device 100 is in the unfolded state, the second housing 120 may include a second side portion 120d (or a portion that is adjacent to the first housing 110) that faces the first housing 110, and fourth to sixth sidewalls 120a, 120b, and 120c that surround the second side portion 120d. The second side portion 120d may include a recessed portion (e.g., a recess portion), at which at least a portion thereof is recessed such that the hinge housing 150 is disposed therein. A recessed portion of the second housing 120 may be disposed adjacent to a recessed portion of the first housing 110. A rear cover may be disposed on a rear surface of the second housing 120. Here, the rear cover may be omitted. When the foldable electronic device 100 is in the unfolded state, a fourth sidewall 120a may be disposed similar to a shape that is continued with the first sidewall 110a with a specific gap therebetween, and a sixth sidewall 120c may be disposed similar to a shape that is continued with the third sidewall 110c with a specific gap therebetween. A fifth sidewall 120b may be disposed to face the second sidewall 110b with respect to the second side portion 120d or the first side portion 110d, or may be disposed parallel to the y-axis direction at a position that is spaced apart by a width of the first sidewall 110a and the fourth sidewall 120a along an observation direction (e.g., when the y-axis is viewed from the -y-axis).

According to an embodiment, the second housing 120 may include at least one support structure to prevent or reduce chances of the hinge housing 150 from entering an interior of the housing while an external impact is applied. The support structure, similar to the first housing 110, may be disposed in at least one of a third zone 120ad (or a portion of the fourth sidewall 120a, which is adjacent to the first zone 110ad), in which the fourth sidewall 120a and the second side portion 120d meet each other, and a fourth zone 120cd (or a portion of the sixth sidewall 120c, which is adjacent to the second zone 110cd), in which the sixth sidewall 120c and the second side portion 120d meet each other. As an example, at least one support structure formed in the second housing 120 may be disposed as a pair with at least one support structure formed in the first housing 110.

According to an embodiment, when the foldable electronic device 100 is in the unfolded state, at least a portion of the hinge housing 150 may be disposed at recessed portions that are formed at a portion, at which the first housing 110 and the second housing 120 face each other, or a portion (e.g., the first side portion 110d and the second side portion 120d) that is adjacent thereto. The hinge housing 150 may be provided in a form elongated in the y-axis direction as a whole, rather than in the x-axis direction. However, the disclosure is not limited thereto, and the foldable electronic device 100 may have a form, in which a length in the x-axis direction is larger than a length in the y-axis direction, depending on a type thereof, or the lengths in the x-axis and y-axis directions may be the same or similar within a specific range. According to an embodiment, the hinge housing 150 may include a hinge housing body 150_b that is formed long in the y-axis direction, and hinge housing sidewalls 150_wr and 150_wl (or hinge sidewalls, or sidewalls) that are disposed at opposite-side peripheries of the hinge housing body 150_b.

According to an embodiment, a z-axis cross-section of the hinge housing body 150_b may include a flat area that is seated on the first side portion 110d and the second side portion 120d when the foldable electronic device 100 is in the unfolded state and is exposed to the outside between the first housing 110 and the second housing 120 when the foldable electronic device 100 is in the folded state, and is formed flat, and curved areas that extend while having a curvature from opposite-side peripheries of the flat area in the z-axis direction. The curved areas may be disposed in a wing shape at opposite-side peripheries of the flat area. As an example, at least a portion of a z-axis cross-section of the hinge housing body 150_b at the bottom part may have a semicircular or semi-elliptical shape that is formed flat. An interior of the hinge housing body 150_b may include an empty space, and at least one hinge structure 200a, 200b, and 200c and at least a portion of an FPCB may be disposed in the empty space of the interior of the hinge housing body 150_b. The first hinge housing sidewall 150_wr (or a right hinge housing sidewall) may be disposed to close (block) a first periphery (e.g., a -y-axis periphery) with respect to a center of the hinge housing body 150_b. As an example, the first hinge housing sidewall 150_wr may include a shape corresponding to a shape of a z-axis cross-section of the hinge housing body 150_b. A second hinge housing sidewall 150_wl (or a left hinge housing sidewall) may have a shape that is similar or identical to the first hinge housing sidewall 150_wr, and may be formed at a position (e.g., a second side periphery, and a y-axis periphery) that is symmetrical to the first hinge housing sidewall 150_wr with respect to a center of the hinge housing body 150_b. The above-described hinge housing 150 may be restrained from protruding (or being deformed to protrude) in the z-axis direction in the support structure of the housings 110 and 120, in a process of the electronic device 100 colliding with the ground surface due to a drop. Accordingly, a collision between the hinge housing 150 and an internal structure of the foldable electronic device 100 may be prevented or reduced (or improved).

According to an embodiment, at least a portion of the display 160 may have flexibility. For example, the display 160 may include a first area 161, at least a portion of which is disposed on the first housing 110, a second area 162, at least a portion of which is disposed on the second housing 120, and a third area 163 (or a folding area, or a foldable area) that is located between the first area 161 and the second area 162. As an example, when the foldable electronic device 100 is in the folded state or the unfolded state, at least a portion of the first area 161 and the second area 162 may be disposed in a flat state, and the third area 163 may have a state, in which at least a portion thereof is curved when the foldable electronic device 100 is in the folded state. For example, the first area 161 and the second area 162 may be maintained in a planar state regardless of a state of the foldable electronic device 100 (the disposition position of the plane is changed), and the third area 163 may be deformed into a curved state or a flat state in correspondence to the state of the foldable electronic device 100. For example, the third area 163 may be in a planar state (or a flat state) when the foldable electronic device 100 is in the unfolded state, and at least a portion of the third area 163 may be in a curved state (or a bent state) when the foldable electronic device 100 is in the folded state.

According to an embodiment, the display 160 may include various layers. For example, the display 160 may include an external protective layer (or a glass layer, or a polymer layer) having a specific transparency and having a designated size, a display panel layer that is disposed under the external protective layer to display a screen, and at least one first rear layer that is disposed under the display panel layer. The first rear layer (or a rear panel, or a rear part) may include at least one (or a layer except for at least one of the above-mentioned layers) of a buffer layer (or an emboss), and a heat dissipating layer (or a metal sheet layer, a metal layer, or a conductive sheet). Additionally or alternatively, the first rear layer may further include an electromagnetic induction panel (e.g., a digitizer). The display 160 may further include a second rear layer that is disposed under the first rear layer. The second rear layer (or a rear panel or a rear part) may include at least one metal layer (or a metal sheet), at least a portion of which is provided as a metallic material. The second rear layer may include a specific pattern (e.g., a lattice pattern or a slit patten) such that at least a portion of which is curved. Alternatively, at least a portion of the second rear layer may be formed of another material (e.g., a polymer material, rubber, or a leather material) that may be curved. At least one of the first rear layer and the second rear layer may be omitted.

The at least one hinge structure 200a, 200b, and 200c may be disposed in the hinge housing 150, and at least some of the plurality of hinge structures 200a, 200b, and 200c may have similar structures and shapes, and may have different structures and shapes from the remaining hinge structures. Alternatively, all three hinge structures 200a, 200b, and 200c may have the same or similar structure, and directions in which they are disposed may be different. Meanwhile, in the illustrated drawings, a form in which three hinge structures 200a, 200b, and 200c are disposed is exemplified, and the foldable electronic device 100 may be disposed with two hinge structures or four or more hinge structures.

The wing plates 131 and 132 are positioned on at least one hinge structure 200a, 200b, and 200c, or are coupled to at least one hinge structure 200a, 200b, and 200c, and are disposed to cover a surface of at least one hinge structure 200a, 200b, and 200c in the z-axis direction when the foldable electronic device 100 is in the unfolded state. The wing plates 131 and 132 may be provided in a form in which they are separated from the housings 110 and 120. Accordingly, a gap may be formed between the wing plates 131 and 132 and the housings 110 and 120. The wing plates 131 and 132 may be disposed to correspond to at least a portion of a lower surface (e.g., a surface in the -z-axis direction) of a third area 163 of the display 160. The wing plates 131 and 132 are rotated clockwise or counterclockwise in response to a hinge operation of at least one hinge structure 200a, 200b, or 200c. For example, a second wing plate 132 may be rotated clockwise while a first wing plate 131 is rotated counterclockwise, and the second wing plate 132 may be rotated counterclockwise while the first wing plate 131 is rotated clockwise. The first wing plate 131 may support a flat first surface of the third area 163 of the display 160, which is folded in a dumbbell shape, and the second wing plate 132 may support a flat second surface (a surface that is symmetrical to the first surface with respect to the z-axis) of the third area 163 of the display 160, which is folded in a dumbbell shape.

The above-described foldable electronic device 100 may include a support structure (e.g., a protruding structure) that is formed in a specific area (e.g., at least one of the first zone 110ad, the second zone 110cd, the third zone 120ad, and the fourth zone 120cd) of the first housing 110 and the second housing 120 and is formed such that at least a portion thereof overlaps sidewalls of the hinge housing 150. Based on this, the foldable electronic device 100 according to an embodiment may prevent or reduce damage to the display 160 by the hinge housing 150 and damage to other various internal structures disposed in the interior of the foldable electronic device 100 by preventing or reducing chances of the hinge housing 150 from entering the interiors of the housings 110 and 120.

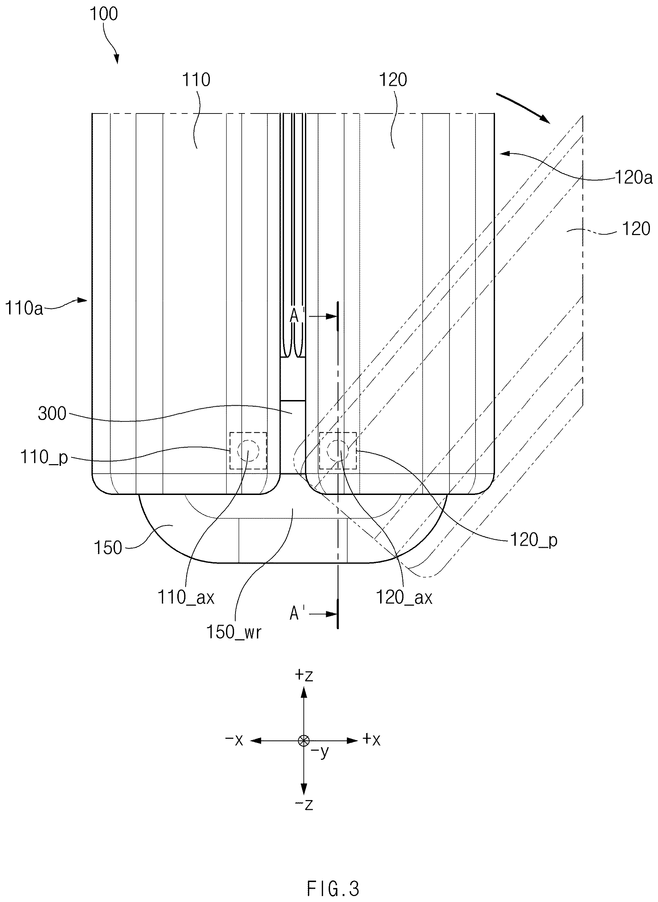

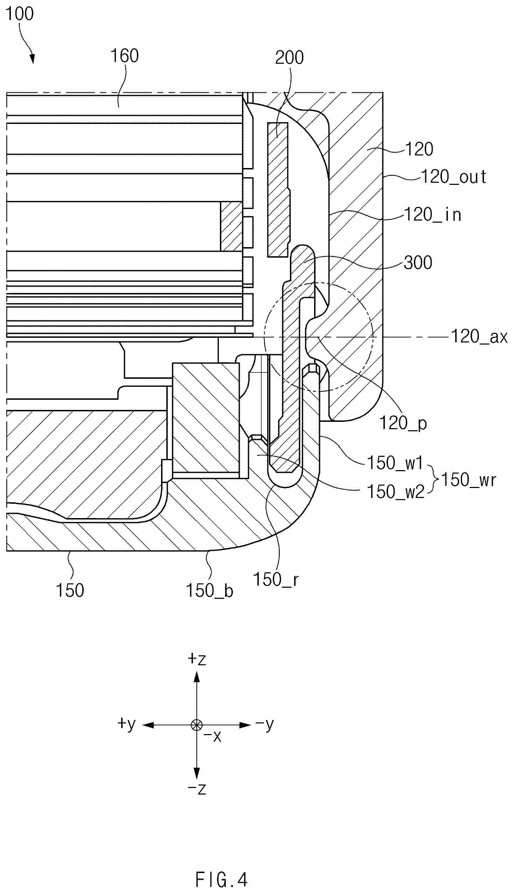

FIG. 3 is a view illustrating an example of shapes of a hinge housing and housings of a foldable electronic device according to an embodiment. FIG. 4 is a view illustrating a cross-section, taken along cutting line A-A' of FIG. 3.

Referring to FIGS. 1 to 4, the foldable electronic device 100 according to an embodiment may include, for example, at least a first housing 110, a second housing 120, and a hinge housing 150. Additionally or alternatively, as described above, the foldable electronic device 100 may include at least one hinge structure 200a, 200b, and 200c that allows the first housing 110 and the second housing 120 to be in the folded state or the unfolded state while performing a hinge operation, and may include a first protective member 300 (or a protection cap, a support part, a support structure, or a sidewall structure) that is disposed on one side of the hinge housing 150, and a first dust prevention part 200 (or a dust blocking part, a variable member, an elastic member, or a bendable structure). The first protective member 300 and the first dust prevention part 200 may be disposed not to be exposed to the outside as they are covered by the hinge housing 150 and the housings 110 and 120 when the foldable electronic device 100 is in the folded state. When the foldable electronic device 100 is in the unfolded state, at least a portion of the first protective member 300 and the first dust prevention part 200 may be disposed to be exposed to the outside.

According to an embodiment, the first housing 110 and the second housing 120, as illustrated, may be disposed parallel to the z-axis when the foldable electronic device 100 is in the folded state. When the foldable electronic device 100 is in the folded state, as illustrated, the hinge housing 150 may be in a state, in which at least a portion thereof is exposed to the outside in the -z-axis direction. According to an embodiment, when viewed from the -y axis in the y-axis direction (e.g., a first direction, in which the hinge housing 150 is viewed), one side of the first sidewall 110a of the first housing 110 may be in a state, in which it overlaps one side of the hinge housing 150, and one side of the fourth sidewall 120a of the second housing 120 may be in a state, in which it overlaps an opposite side of the hinge housing 150.

According to an embodiment, a first hinge housing sidewall 150_wr may be formed at one end of the hinge housing 150. The first hinge housing sidewall 150_wr may include, for example, two sub-sidewalls 150_w1 and 150_w2 that are spaced apart by a specific interval upward (e.g., in the z-axis direction) from a bottom surface of the hinge housing body 150_b. Alternatively, the first hinge housing sidewall 150_wr may include a first member accommodation part 150_r (or a first recess, or a first accommodation part) having a specific depth from the z axis in the -z-axis direction such that at least a portion of the first protective member 300 may be inserted thereinto. The first member accommodation part 150_r may be defined, for example, as a space between two sub-sidewalls 150_w1 and 150_w2 that are spaced apart by a specific interval upward (e.g., in the z-axis direction) from a bottom surface of the hinge housing body 150_b. At least a portion of the first protective member 300 may be inserted into the first member accommodation part 150_r. As an example, a lower area of the first protective member 300 may be inserted into and fixed to the first member accommodation part 150_r.

According to an embodiment, a second hinge housing sidewall 150_wl having the same or a similar structure as the above-described first hinge housing sidewall 150_wr may also be formed at an opposite end of the hinge housing 150. The second hinge housing sidewall 150_wl may include a second member accommodation part (or a member accommodation part that is the same as or similar to the first member accommodation part 150_r, or a second recess) that has a specific depth from the z axis in the -z-axis direction such that at least a portion of a second protective member corresponding to the first protective member 300 may be inserted thereinto. The second member accommodation part may be defined, for example, as a space between two sub-sidewalls (e.g., sub-sidewalls corresponding to the two sub-sidewalls 150_wl and 150_w2) that are spaced apart by a specific interval upward (e.g., in the z-axis direction) from a bottom surface of the hinge housing body 150_b. The first hinge housing sidewall 150_wr and the second hinge housing sidewall 150_wl may be formed of the same material as that of the hinge housing 150.

According to an embodiment, the first housing 110 may include a first protrusion 110_p (or a first protruding structure, or a first holding part), and the second housing 120 may include a second protrusion 120_p (or a second protruding structure, or a second holding part). The first protrusion 110_p, for example, may be formed to protrude from an inside of the first sidewall 110a of the first housing 110 toward the third sidewall 110c. The first housing 110 may be rotated about a first rotation axis 110_ax (or a first imaginary axis) corresponding to a center of the first protrusion 110_p. The second housing 120 may be rotated about a second rotation axis 120_ax corresponding to a center of the second protrusion 120_p. The first protrusion 110_p and the second protrusion 120_p may be formed at positions spaced apart by a predetermined interval that is designed in advance. According to an embodiment, at least a portion of the first protrusion 110_p may be held in a first recess of a first protective member 300 that is disposed in the hinge housing 150. The first protrusion 110_p may be formed of the same material (e.g., a metallic material) as that of the first housing 110. Alternatively, the first protrusion 110_p may be formed of a different material (e.g., a non-metallic material, and a material having a strength that is equal to or greater than a specific magnitude that is designed in advance) from that of the first housing 110. Because the first protrusion 110_p is formed to protrude from the -y axis direction in the y-axis direction on an inner surface of the first sidewall 110a, at least a portion of the first protrusion 110_p and at least a portion of the first hinge housing sidewall 150_wr of the hinge housing 150 may be disposed to overlap each other when viewed from the z-axis direction in the -z-axis direction.

According to an embodiment, the second protrusion 120_p, for example, may be formed to protrude from an inside of the fourth sidewall 120a of the second housing 120 toward the sixth sidewall 120c. The second protrusion 120_p may be formed to protrude from an outer surface 120_out of the second housing 120 toward the inner surface 120_in, and to further protrude than a periphery of the inner surface 120_in of the second housing 120 toward the first protective member 300. At least one of a shape, a size, and a material of the second protrusion 120_p may be formed to be the same as at least one of a shape, a size, and a material of the above-described first protrusion 110_p. When viewed from the z-axis direction in the -z-axis direction (e.g., a direction that faces the display 160 when the foldable electronic device 100 is in an unfolded state), at least a portion of the second protrusion 120_p may be disposed to overlap the second hinge housing sidewall 150_wl (or at least a portion of the hinge housing 150, or at least a portion of an upper end that defines an opening of the hinge housing 150). According to an embodiment, at least a portion of the second protrusion 120_p may be held in the second recess of the first protective member 300. The second protrusion 120_p may be formed of the same material as that of the second housing 120 or the first protrusion 110_p.

According to an embodiment, the first protective member 300 may be formed to protrude higher in the z-axis direction than an upper end of the hinge housing 150 at a one-side periphery of the hinge housing 150, and may serve to block an interior of the foldable electronic device 100 such that the interior may not be viewed from the outside. Alternatively, the first protective member 300 may be disposed at a one-side periphery of the hinge housing 150, and may serve to prevent or reduce introduction of foreign substances into the interior of the foldable electronic device 100 from the outside. The first protective member 300 may have a plate shape, of which a thickness in the y axis is smaller than a length thereof in the z axis or the x axis. At least a portion of an outer surface of the first protective member 300 in the -y-axis direction may be located on the same surface as an outer surface of the hinge housing 150 in the -y-axis direction. Alternatively, the first protective member 300 may be disposed not to protrude further in the -y-axis direction than an outermost surface (e.g., one surface when viewed in a direction that faces the y-axis direction from the -y axis) of the first hinge housing sidewall 150_wr of the hinge housing 150. The first protective member 300 may be formed of a metallic material that is similar to that of the hinge housing 150. Alternatively, the first protective member 300 may be formed of at least one of a plastic material or a polymer material that is different from that of the hinge housing 150. The first protective member 300 may include a first recess, in which at least a portion of a first protrusion 110_p of the first housing 110 is held (or inserted), and a second recess, in which at least a portion of a second protrusion 120_p of the second housing 120 is held (or inserted).

According to an embodiment, a hinge housing 150 of the foldable electronic device 100 may further include a second protective member that is disposed at a second hinge housing sidewall 150_wl, and the second protective member may be formed to be identical or similar in at least one of a shape, a size, and a material of the first protective member 300.

As described above, in the foldable electronic device 100 according to an embodiment, because a first protrusion 110_p of the first housing 110 and a second protrusion 120_p of the second housing 120 are disposed to overlap each other in the z-axis direction with a first hinge housing sidewall 150_wr, the hinge housing 150 may be maintained in an initial state while not entering an inside of the first housing 110 and the second housing 120 even though an external pressure is applied toward the first hinge housing sidewall 150_wr. Similarly, in the foldable electronic device 100 according to an embodiment, because a third protrusion (a protrusion formed in a third sidewall 110c of the first housing 110 while having the same or a similar structure as that of the first protrusion 110_p) of the first housing 110 and a fourth protrusion (a protrusion formed in a sixth sidewall 120c of the second housing 120 while having the same or a similar structure as that of the second protrusion 120_p) of the second housing 120 are disposed to overlap a second hinge housing sidewall 150_wl in the z-axis direction, the hinge housing 150 may be maintained in an initial state while not entering an inside of the first housing 110 and the second housing 120 even though an external pressure is applied toward the second hinge housing sidewall 150_wl.

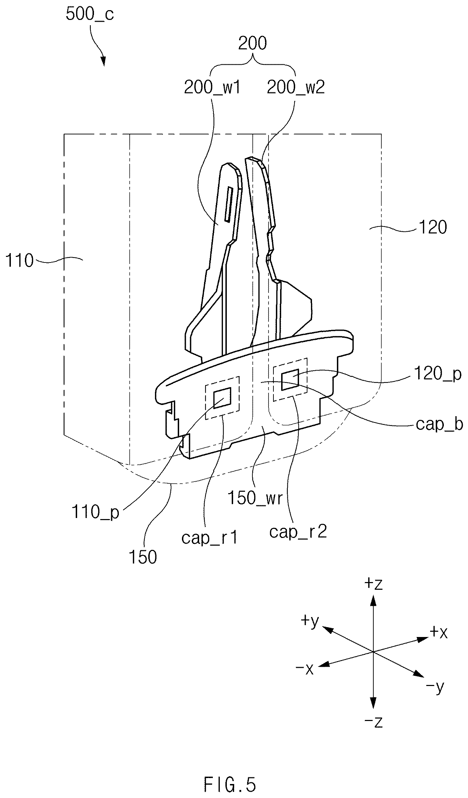

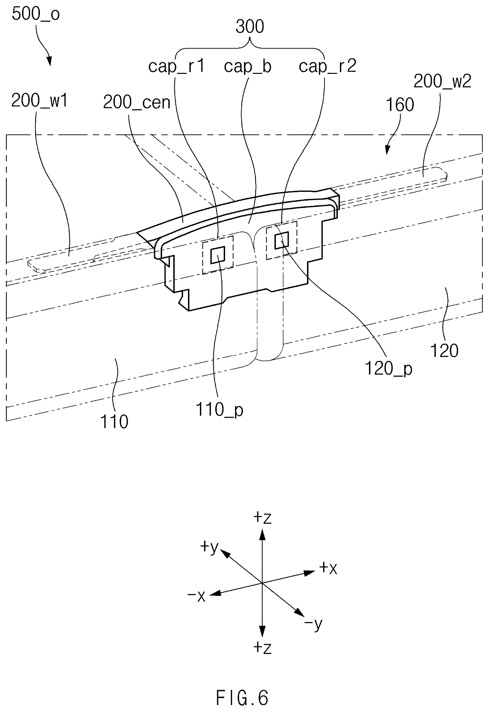

FIG. 5 is a view illustrating an example of a hinge housing and housings of an electronic device according to an embodiment in a folded state. FIG. 6 is a view illustrating an example of a hinge housing and housings of an electronic device according to an embodiment in an unfolded state.

Referring to FIGS. 1 to 6, a foldable electronic device 100 according to an embodiment may include a first housing 110, a second housing 120, a first protective member 300, and a first dust prevention part 200.

According to an embodiment, when the foldable electronic device 100 is in the folded state (or a closed state) 500_c, the first housing 110 and the second housing 120 may be disposed parallel to each other in an 11-shaped form to face the z-axis direction. In the foldable electronic device 100 according to an embodiment, because the first protective member 300 is fixed to a one-side periphery (e.g., a periphery, at which a first hinge housing sidewall 150_wr is formed) of the hinge housing 150, it may be maintained without a change in state while the foldable electronic device 100 performs a folding or unfolding operation.

According to an embodiment, the first protective member 300 may include a plate-shaped protection body cap_b, and at least a portion of the protection body cap_b may be inserted into and fixed to the hinge housing 150, and the remaining portion thereof may be formed to protrude by a specific height to an upper side (e.g., the z-axis direction) of the hinge housing 150. Correspondingly, a z-axis height of the protection body cap_b of the first protective member 300 may be formed to be higher than an upper end of the hinge housing 150. A first recess cap_r1, in which at least a portion of a first protrusion 110_p formed in the first housing 110 is held (or disposed or inserted), and a second recess cap_r2, in which at least a portion of a second protrusion 120_p formed in the second housing 120 is held (or disposed or inserted), may be formed at one side of the protection body cap_b of the first protective member 300. The first protective member 300 may be formed through metal injection molding (MIM). As an example, at least a portion of the first protective member 300 may be formed of an F75 composite metal material for MIM.

According to various embodiments, a second protective member disposed at a second hinge housing sidewall 150_wl of the hinge housing 150 may have a structure and a size that are the same as or similar to those of the first protective member 300.

According to an embodiment, the first dust prevention part 200 may be disposed adjacent to the first protective member 300. The first dust prevention part 200 may include, for example, a prevention part central area 200_cen, a first wing 200_w1, and a second wing 200_w2. The prevention part central area 200_cen may be disposed adjacent to the first protective member 300 while being inserted into an area between the first housing 110 and the second housing 120. According to an embodiment, a height and a shape of the prevention part central area 200_cen in the z-axis direction may be formed to be the same as or similar to a height and a shape of the first protective member 300 in the z-axis direction. A first wing 200_w1 of the first dust prevention part 200 may be disposed on one side of the first housing 110 (e.g., in at least a partial area of an inside of a first sidewall 110a), and a second wing 200_w2 may be disposed on one side of the second housing 120 (e.g., in at least a partial area of an inside of a fourth sidewall 120a). Accordingly, when the foldable electronic device 100 is in the folded state 500_c, at least a portion of the first wing 200_w1 and the second wing 200_w2 may be disposed to correspond to a disposition state of the first housing 110 and the second housing 120. Alternatively, the first wing 200_w1 and the second wing 200_w2 may be disposed to face (or be opposed to) each other. The first dust prevention part 200 may be formed of, for example, rubber, plastic, polymer, or a mixture thereof. As an example, at least a portion of the first dust prevention part 200 may include a thermoplastic polyurethane (TPU) material.

According to various embodiments, a second dust prevention part that is the same as or similar to the first dust prevention part 200 also may be disposed in the second hinge housing sidewall 150_wl of the hinge housing 150. The second dust prevention part may have at least one of a size, a shape, a material, and a position that is the same as or similar to those of the first dust prevention part 200.

According to an embodiment, when the foldable electronic device 100 is in the unfolded state (or the open state) 500_o, the first protective member 300 may be maintained in a state, in which it is fixed to the hinge housing 150. In this state, at least a portion of a first protrusion 110_p of the first housing 110 may be held in or inserted into a first recess cap_r1 of the first protective member 300, and at least a portion of a second protrusion 120_p of the second housing 120 may be held in or inserted into a second recess cap_r2 of the first protective member 300.

According to an embodiment, a first wing 200_w1, at least a portion of which is inserted into a first sidewall 110a of the first housing 110, and a second wing 200_w2, at least a portion of which is inserted into a fourth sidewall 120a of the second housing 120, may be disposed to face the same direction in correspondence to the unfolded state 500_o of the foldable electronic device 100. As an example, both of an upper surface of the first wing 200_w1 and an upper surface of the second wing 200_w2 may be disposed to face an upward direction (e.g., a direction, in which the display 160 is viewed). Because at least a portion of the first wing 200_w1 and the second wing 200_w2 may be disposed on an inside of the first sidewall 110a and an inside of the fourth sidewall 120a, it may not be viewed from the outside, and at least a portion of the prevention part central area 200_cen may be viewed from the outside when the foldable electronic device 100 is in the unfolded state 500_o, and may not be viewed from the outside when the foldable electronic device 100 is in the folded state 500_c.

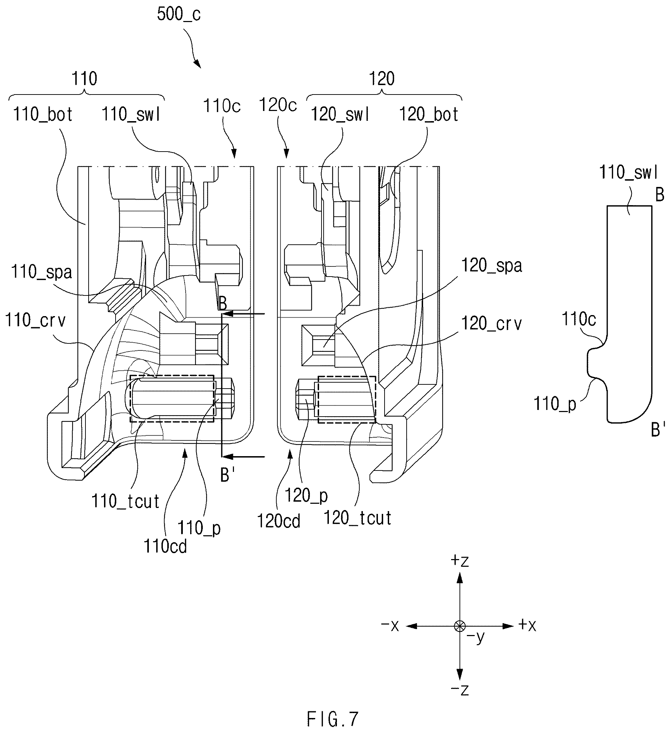

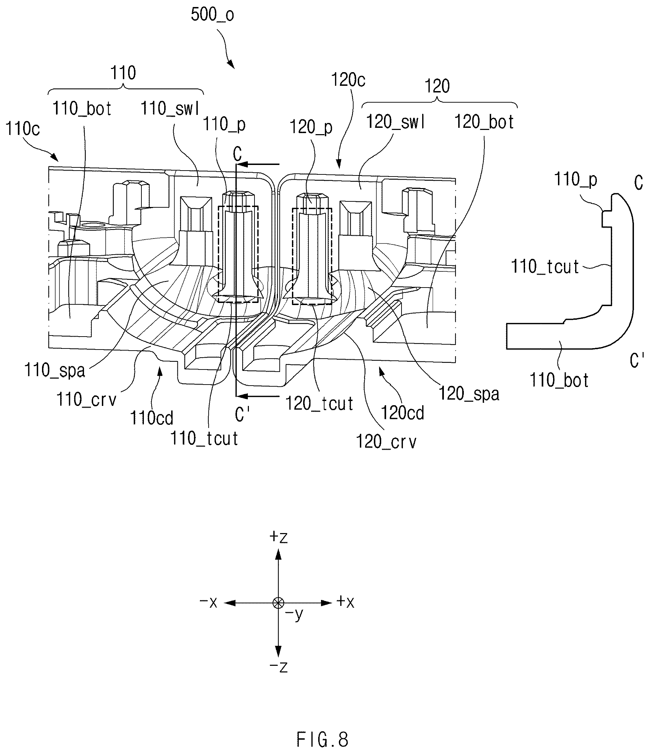

FIG. 7 is a view illustrating an example of portions of a first housing and a second housing in a folded state according to an embodiment. FIG. 8 is a view illustrating an example of portions of a first housing and a second housing in an unfolded state according to an embodiment.

Referring to FIGS. 1 to 8, the foldable electronic device 100 according to an embodiment may include at least a first housing 110 and a second housing 120.

According to an embodiment, the first housing 110 may include, for example, a first bottom area 110_bot, a first housing sidewall 110_swl (or at least one of a first sidewall 110a and a third sidewall 110c), a first housing inner curve area 110_crv, a first housing inner space 110_spa, a first cutting area 110_tcut, and a first protrusion 110_p. As an example, the first housing sidewall 110_swl may be at least a portion of the third sidewall 110c (or the first sidewall 110a) described above in FIG. 2. At least one of the first housing inner curve area 110_crv, the first housing inner space 110_spa, the first cutting area 110_tcut, and the first protrusion 110_p may be formed in the first sidewall 110a or the third sidewall 110c, respectively, or in any one thereof.

According to an embodiment, the first bottom area 110_bot may include an outer surface, on which a rear cover (or an auxiliary display 160a) is positioned, and an inner surface, on which an internal part of the foldable electronic device 100 is positioned. A height of an outer surface of the first bottom area 110_bot may be formed to be lower than surroundings (e.g., upper ends of the first to third sidewalls 110a, 110b, and 110c). A height difference between an outer surface of the first bottom area 110_bot and the surroundings may correspond to a thickness of the rear cover. An inner surface of the first bottom area 110_bot may include various shapes so that various internal structures or internal parts related to operations of the foldable electronic device 100 may be positioned thereon. As an example, at least a portion of an inner surface of the first bottom area 110_bot may be formed of a metallic material, and the remaining portion thereof may be formed of an injection-molded material.

According to an embodiment, the first housing sidewall 110_swl may extend in a direction (or a direction having an angle of more than 0) that is perpendicular to a specific point of the first bottom area 110_bot. The first housing sidewall 110_swl may be, for example, at least one of a first sidewall 110a or a third sidewall 110c. The first housing sidewall 110_swl may be formed to surround a one-side periphery of the display 160.

According to an embodiment, the first housing inner curve area 110_crv may be disposed in an area of the first bottom area 110_bot, which is close to a first side portion 110d or a second zone 110cd (or a first zone 110ad), and may have a curvature corresponding to at least a portion of a curvature of an outer surface of the hinge housing 150. When the foldable electronic device 100 is in the unfolded state, the first housing inner curve area 110_crv may be disposed to surround a portion of the hinge housing 150 (e.g., one side with respect to a center line in a direction that faces a housing sidewall of the hinge housing 150) (e.g., a left rear surface). When the foldable electronic device 100 is in the folded state, the first housing inner curve area 110_crv may be in a state (e.g., a state, in which it is disposed perpendicularly to a rear surface of the hinge housing 150), in which it is spaced apart from one side of a rear surface of the hinge housing 150.

According to an embodiment, the first housing inner space 110_spa may be defined at least by the first housing inner curve area 110_crv. A portion of the hinge housing 150 (e.g., a left portion with respect to a center line of the hinge housing 150) may be seated in the first housing inner space 110_spa. According to an embodiment, a portion of a hinge structure 200a, 200b, and 200c, on which at least a portion of the hinge housing 150 is seated, may be disposed in the first housing inner space 110_spa.

According to an embodiment, the first cutting area 110_tcut may include at least a portion of the first housing sidewall 110_swl, except for the first protrusion 110_p. In a process of forming the first protrusion 110_p, a cutting process is applied to the first housing sidewall 110_swl of a metallic material, so that a protruding area of a length (e.g., a length including the first cutting area 110_tcut and the first protrusion 110_p) that is greater than the first protrusion 110_p may be formed. Additionally, when a size and a shape of the first protrusion 110_p are determined to correspond to a groove size of the first protective member 300, a first cutting area 110_tcut may be formed through a cutting process (e.g., a computerized numerical control (CNC) T-cut process), and the first protrusion 110_p may be formed.

According to an embodiment, the first protrusion 110_p may be formed to protrude further than surroundings from an inner surface of the first housing sidewall 110_swl. Such a first protrusion 110_p may be formed in the first housing inner space 110_spa and may be coupled to a first recess cap_r1 of the first protective member 300 that is disposed in the hinge housing 150. According to an embodiment, the first protrusion 110_p may include a central area and a peripheral area, the central area may be formed flat, and the peripheral area may have a specific curvature as it goes from a center in the z-axis direction or toward the center in the -z-axis direction. The central area may have a polygonal shape (e.g., a rectangular shape) or a circular (or elliptical) shape.

According to an embodiment, the second housing 120 may have a structure that is the same as or similar in a specific range to that of the first housing 110. For example, the second housing 120 may include a second bottom area 120_bot, a second housing sidewall 120_swl (or at least one of a fourth sidewall 120a and a sixth sidewall 120c), a second housing inner curve area 120_crv, a second housing inner space 120_spa, a second cutting area 120_tcut, and a second protrusion 120_p. As an example, the second housing sidewall 120_swl may be at least a portion of the sixth sidewall 120c (or the fourth sidewall 120a) described above in FIG. 2. At least one of the second housing inner curve area 120_crv, the second housing inner space 120_spa, the second cutting area 120_tcut, and the second protrusion 120_p may be formed in at least one of the fourth sidewall 120a and the sixth sidewall 120c.

According to an embodiment, the second bottom area 120_bot, similar or identical to the first bottom area 110_bot, may include an outer surface, on which a rear cover (or an auxiliary display 160a) is positioned, and an inner surface, on which an internal part of the foldable electronic device 100 is positioned. As an example, when a structure positioned on the first housing 110 is different, a shape of the second bottom area 120_bot may be different from a shape of the first bottom area 110_bot.

According to an embodiment, the second housing sidewall 120_swl may be, for example, at least one of a fourth sidewall 120a or a sixth sidewall 120c. The second housing sidewall 120_swl may be formed to surround an opposite-side periphery of the display 160. Such a second housing sidewall 120_swl may have a structure, a size, and a material that are the same as or similar to those of the first housing sidewall 110_swl.

According to an embodiment, the second housing inner curve area 120_crv may correspond to the first housing inner curve area 110_crv, and the second housing inner space 120_spa may correspond to the first housing inner space 110_spa, and the second cutting area 120_tcut may correspond to the first cutting area 110_tcut.

According to an embodiment, the second protrusion 120_p, similar to the first protrusion 110_p, may be formed to protrude further than surroundings from an inner surface of the second housing sidewall 120_swl. A protruding height of the second protrusion 120_p may be the same as a protruding height of the first protrusion 110_p. With respect to a folding axis, about which the display 160 is folded, the second protrusion 120_p may be disposed at a position that is symmetrical to the first protrusion 110_p.

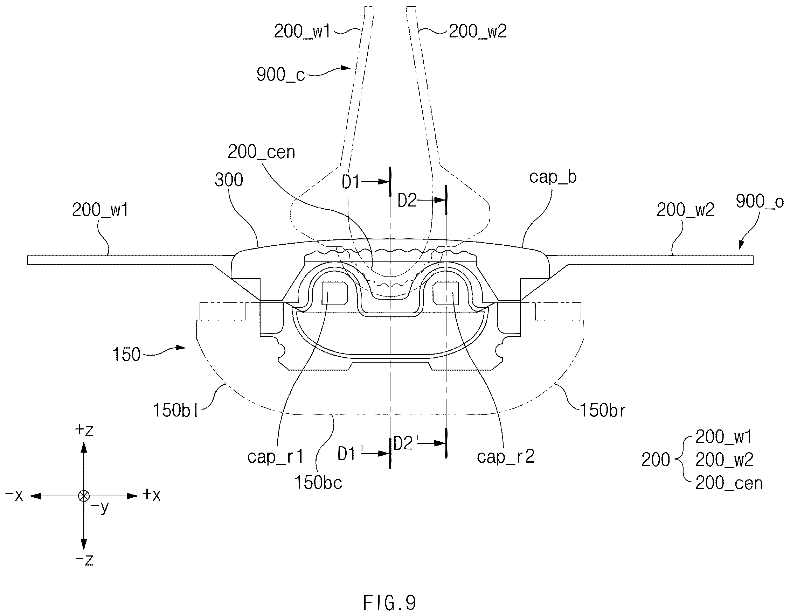

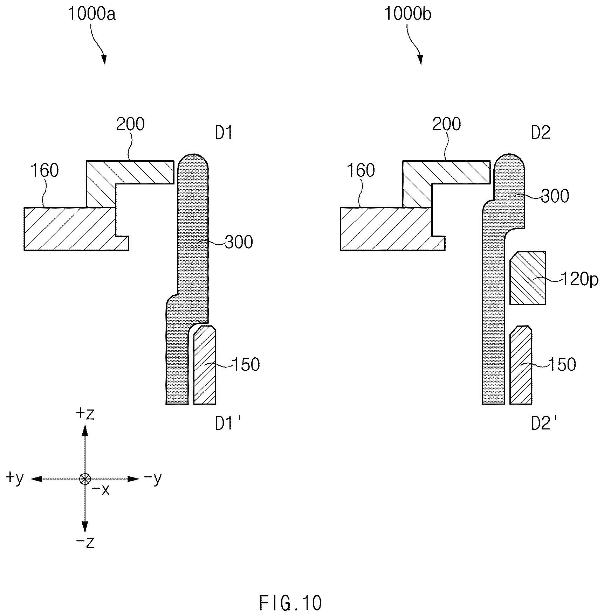

FIG. 9 is a view illustrating some components of a foldable electronic device according to an embodiment in an unfolded state. FIG. 10 is a view illustrating an example of a cross-section, taken along cutting lines of FIG. 9.

Referring to FIGS. 1 to 10, a foldable electronic device 100 according to an embodiment may include at least a hinge housing 150. Additionally or alternatively, the foldable electronic device 100 may include a first protective member 300 and a first dust prevention part 200. Furthermore, as described above, the foldable electronic device 100 may further include a second protective member corresponding to the first protective member 300 and a second dust prevention part corresponding to the first dust prevention part 200.

According to an embodiment, the hinge housing 150 may include a hinge housing body 150_b, and the hinge housing body 150_b may include a flat hinge bottom area 150bc, a first curved part 150_bl (or a left curved part) that extends to one side (e.g., a left side) of the hinge bottom area 150bc, and a second curved part 150_br (or a right curved part) that extends to an opposite side (e.g., a right side) of the hinge bottom area 150bc. Additionally or alternatively, as described above in FIG. 4, the hinge housing 150 may further include hinge housing sidewalls 150_wr and 150_wl that are disposed at opposite-side peripheries of the hinge housing body 150_b in a lengthwise direction (or a folding axis direction, about which the display 160 is folded). The currently illustrated drawing illustrates a position, at which the first hinge housing sidewall 150_wr (or the right housing sidewall) is viewed. The first hinge housing sidewall 150_wr, as described above, may include a first member accommodation part 150_r, into which at least a portion of the first protective member 300 may be inserted, and a lower portion of the first protective member 300 may be inserted into the first member accommodation part 150_r.

According to an embodiment, the first protective member 300 may be provided in a plate shape, and may include a first recess cap_r1, in which at least a portion of a first protrusion 110_p of the first housing 110 is held (or inserted), and a second recess cap_r2, in which at least a portion of a second protrusion 120_p of the second housing 120 is held (or inserted). The first protective member 300 may be disposed adjacent to the first dust prevention part 200. At least a portion of an upper end of the first protective member 300 may be exposed to the outside when the foldable electronic device 100 is in an unfolded state, and depending on a folded state of the foldable electronic device 100, at least a portion thereof may be covered by the first housing 110 and the second housing 120.

According to an embodiment, when the foldable electronic device 100 is in an unfolded state 900_o, the first dust prevention part 200 may be in a state, in which a first wing 200_w1 and a second wing 200_w2 are unfolded leftward and rightward with respect to the prevention part central area 200_cen. The first wing 200_w1, as described above, may be disposed on one side of the first sidewall 110a (e.g., between the first sidewall 110a and a decorative part that is disposed at an upper portion of the first sidewall 110a, or below an upper end of the first sidewall 110a when a z-axis cross-section of the first sidewall 110a is provided in an inverted L shape). The first wing 200_w1 may be rotatable in response to a rotation operation of the first housing 110. The second wing 200_w2 may be disposed on one side of the fourth sidewall 120a (e.g., between the fourth sidewall 120a and a decorative part that is disposed at an upper portion of the fourth sidewall 120a, or below an upper end of the fourth sidewall 120a when a z-axis cross-section of the fourth sidewall 120a is provided in an inverted L shape). The second wing 200_w2 may be rotatable in response to a rotation operation of the second housing 120. As an example, when the foldable electronic device 100 is in a folded state 900_c, the prevention part central area 200_cen may be curved in a droplet shape, and the first wing 200_w1 and the second wing 200_w2 may be disposed in the z-axis direction.

According to an embodiment, in a cross-sectional form 1000a of some components of the foldable electronic device 100 illustrated in FIG. 9, taken along cutting line D1-D1', at least a portion of a first dust prevention part 200 may be positioned at an upper portion of a periphery of a display 160, and a first protective member 300 may be disposed adjacent to the first dust prevention part 200. The first protective member 300 may be seated on a first member accommodation part 150_r provided in the hinge housing 150. When viewed in a direction (e.g., from the -z axis in the z-axis direction) in which the display 160 is exposed when the foldable electronic device 100 is in an unfolded state 900_o, a portion (e.g., an outer surface) of the first protective member 300 may at least partially overlap an outer surface of the hinge housing 150.

In a cross-sectional form 1000b of some components of the foldable electronic device 100 illustrated in FIG. 9, taken along cutting line D2-D2', at least a portion of the first dust prevention part 200 may be positioned at an upper portion of a periphery of the display 160, and the first protective member 300 may be disposed adjacent to the first dust prevention part 200. The first protective member 300 may be seated on a first member accommodation part 150_r provided in the hinge housing 150. At least a portion of a second protrusion 120_p of the second housing 120 may be held in a second recess cap_r2 of the first protective member 300. When viewed in a direction in which the display 160 is exposed when the foldable electronic device 100 is in an unfolded state 900_o, a portion (e.g., an outer surface) of the first protective member 300, at least a portion of the second protrusion 120_p, and an outer surface of the hinge housing 150 may at least partially overlap each other.

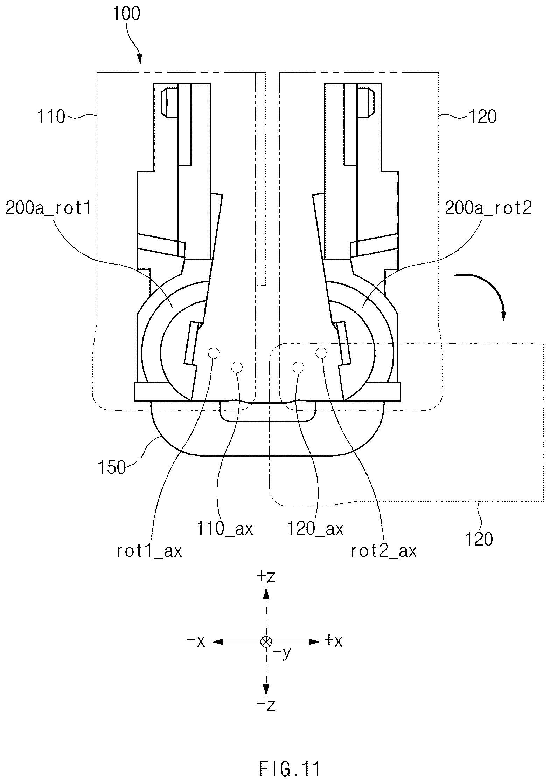

FIG. 11 is a view illustrating an example of axis relationships of a foldable electronic device according to an embodiment.

Referring to FIGS. 1 to 11, a foldable electronic device 100 according to an embodiment may include a first housing 110, a second housing 120, and a hinge housing 150, and may include at least one hinge structure 200a, 200b, and 200c that is seated on the hinge housing 150.

According to an embodiment, the hinge structures 200a, 200b, and 200c may include a first rotary member 200a_rot1 that is rotated about a first axis rot1_ax (an imaginary first axis) while being involved in rotation of the first housing 110, and a second rotary member 200a_rot2 that is rotated about a second axis rot2_ax (an imaginary second axis) different from the first axis rot1_ax while being involved in rotation of the second housing 120. Additionally or alternatively, the hinge structures 200a, 200b, and 200c may include a first arm member that is rotated about a third axis (e.g., a first actual shaft) that is different from the first rotary member 200a_rot1 while being rotated in response to rotation of the first rotary member 200a_rot1, a second arm member that is rotated about a fourth axis (e.g., a second actual shaft) that is different from the second rotary member 200a_rot2 while being rotated in response to rotation of the second rotary member 200a_rot2, at least one gear (e.g., a first main gear coupled to the first arm member, a second main gear coupled to the second arm member, and first and second idle gears that connect the first main gear and the second main gear) and are rotated in response of rotation of the first arm member and the second arm member, a cam structure, and a plurality of elastic members. The first rotary member 200a_rot1 and the second rotary member 200a_rot2 may be included, for example, in at least one of the hinge structures 200a, 200b, and 200c. The hinge structures 200a, 200b, and 200c may be fixed in the hinge housing 150. The first rotary member 200a_rot1 may be coupled to the first housing 110, and the second rotary member 200a_rot2 may be coupled to the second housing 120.

According to an embodiment, when the first rotary member 200a_rot1 is rotated along a rail of a fixing bracket provided in the hinge structures 200a, 200b, and 200c, the first rotary member 200a_rot1 may be rotated about the first axis rot1_ax (or the first imaginary axis). As an example, when the foldable electronic device 100 is folded in an unfolded state, the first rotary member 200a_rot1 may be rotated clockwise about the first axis rot1_ax, and when it is unfolded from the folded state, the first rotary member 200a_rot1 may be rotated counterclockwise about the first axis rot1_ax. While the first rotary member 200a_rot1 is rotated about the first axis rot1_ax, the first housing 110 may be rotated about a first rotation axis 110_ax corresponding to a center point of the first protrusion 110_p. Here, a position of the first rotation axis 110_ax may be different from that of the first axis rot1_ax.

According to an embodiment, when the second rotary member 200a_rot2 is rotated along a rail of a fixing bracket provided in the hinge structures 200a, 200b, and 200c, the second rotary member 200a_rot2 may be rotated about the second axis rot2_ax (or the second imaginary axis). The second axis rot2_ax may be formed at a different position from the first axis rot1_ax. As an example, when the foldable electronic device 100 is folded in an unfolded state, the second rotary member 200a_rot2 may be rotated counterclockwise about the second axis rot2_ax, and when it is unfolded from the folded state, the second rotary member 200a_rot2 may be rotated clockwise about the second axis rot2_ax. While the second rotary member 200a_rot2 is rotated about the second axis rot2_ax, the second housing 120 may be rotated about a second rotation axis 120_ax corresponding to a center point of the second protrusion 120_p. Here, a position of the second rotation axis 120_ax may be different from that of the second axis rot2_ax. Furthermore, the second rotation axis 120_ax may be formed at a different position from the first rotation axis 110_ax.

According to an embodiment, a distance between the first axis rot1_ax and the second axis rot2_ax may be formed to be larger than a distance between the first rotation axis 110_ax and the second rotation axis 120_ax. Alternatively, a distance between the first rotation axis 110_ax and the second rotation axis 120_ax may be formed to be shorter than a distance between the first axis rot1_ax and the second axis rot2_ax. According to an embodiment, when the foldable electronic device 100 is in an unfolded state, with respect to rear surfaces of the first housing 110 and the second housing 120, positions of the first axis rot1_ax and the second axis rot2_ax in the z-axis direction may be formed above positions of the first rotation axis 110_ax and the second rotation axis 120_ax in the z-axis direction. Alternatively, when the foldable electronic device 100 is in the unfolded state, a distance between the first axis rot1_ax or the second axis rot2_ax and a front surface (or a rear surface) of the display 160 may be formed to be smaller than a distance between the first rotation axis 110_ax or the second rotation axis 120_ax and the front surface (or the rear surface) of the display 160. Alternatively, when the foldable electronic device 100 is in the unfolded state, the first axis rot1_ax or the second axis rot2_ax may be disposed closer to a front surface (or a rear surface) of the display 160 than the first rotation axis 110_ax or the second rotation axis 120_ax.

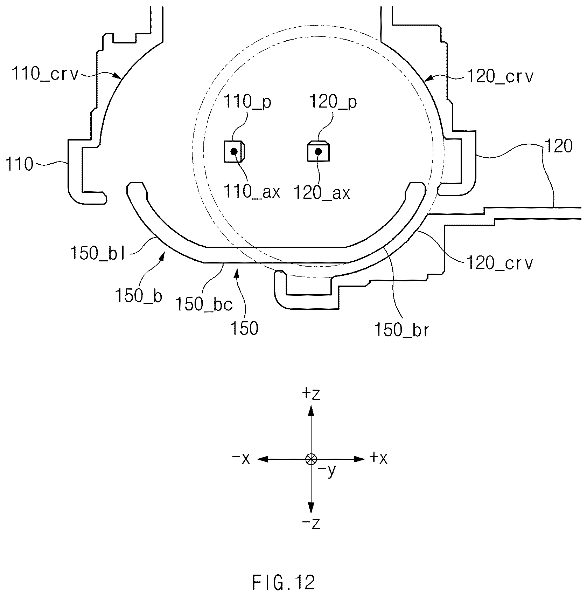

FIG. 12 is a view illustrating an example of a relationship of rotation axes and peripheral structures according to an embodiment.

Referring to FIGS. 1 to 12, a foldable electronic device 100 according to an embodiment may include at least a first housing 110, a second housing 120, and a hinge housing 150. As described above, the first housing 110 may be rotated within a specific angle range about a first rotation axis 110_ax corresponding to a center point of a first protrusion 110_p formed on an inside thereof. Similarly, the second housing 120 may be rotated within a specific angle range about a second rotation axis 120_ax corresponding to a center point of a second protrusion 120_p formed on an inside thereof.

According to an embodiment, a hinge housing body 150_b of the hinge housing 150 may include a hinge bottom area 150bc, at least a portion of which is formed to be flat, a first curved part 150_bl that extends to one side (e.g., a left side) of the hinge bottom area 150bc, and a second curved part 150_br that extends to an opposite side (e.g., a right side) of the hinge bottom area 150bc. A center point of an imaginary circle including a curvature of an outer surface of the first curved part 150_bl may be a center point of the first protrusion 110_p. A center point of an imaginary circle including a curvature of an outer surface of the second curved part 150_br may be a center point of the second protrusion 120_p.

According to an embodiment, when the foldable electronic device 100 is in the unfolded state, an outer surface of the first curved part 150_bl may face an inner surface of a first housing inner curve area 110_crv formed on an inside of the first housing 110. Similarly, when the foldable electronic device 100 is in the unfolded state, an outer surface of the second curved part 150_br may face an inner surface of a second housing inner curve area 120_crv formed on an inside of the second housing 120. A center point of an imaginary circle including the second housing inner curve area 120_crv may be a center point of the second protrusion 120_p. Furthermore, a center point of an imaginary circle including the first housing inner curve area 110_crv may be a center point of the first protrusion 110_p.

According to an embodiment, an imaginary circle including a curvature of the first curved part 150_bl as an arc and an imaginary circle including a curvature of the first housing inner curve area 110_crv as an arc may have the same center point (e.g., a center point of the first protrusion 110_p) when the foldable electronic device 100 is in the unfolded state or the folded state (or in a state, in which it is held at a specific angle between 0 and 180 degrees). An imaginary circle including a curvature of the second curved part 150_br as an arc and an imaginary circle including a curvature of the second housing inner curve area 120_crv as an arc may have the same center point (e.g., a center point of the second protrusion 120_p).

According to an embodiment, at least a partial curvature (or an arc area) of the first housing inner curve area 110_crv when the foldable electronic device 100 is in the folded state and the unfolded state (or in a state, in which it is held at a specific angle between 0 and 180 degrees) may be located on one imaginary circle having the first protrusion 110_p as a center point. At least a partial curvature (or an arc area) of the second housing inner curve area 120_crv when the foldable electronic device 100 is in the folded state and the unfolded state (or in a state, in which it is held at a specific angle between 0 and 180 degrees) may be located on one imaginary circle having the second protrusion 120_p as a center point.

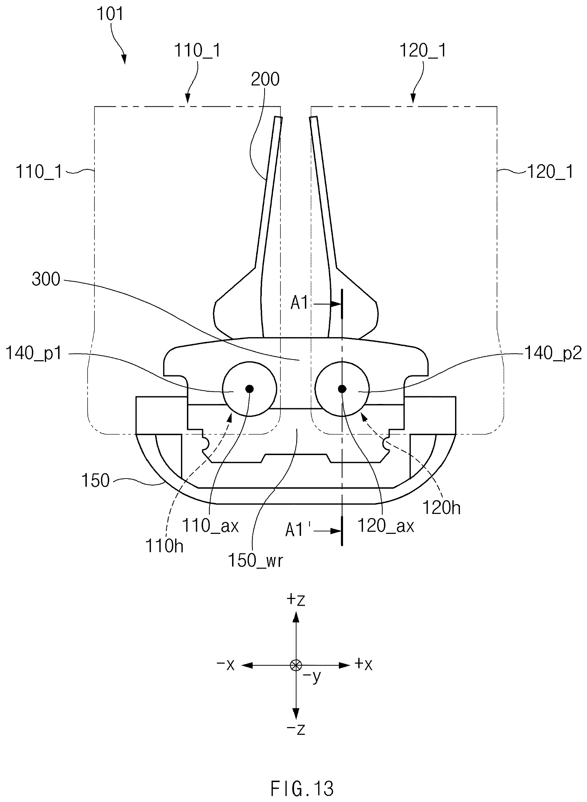

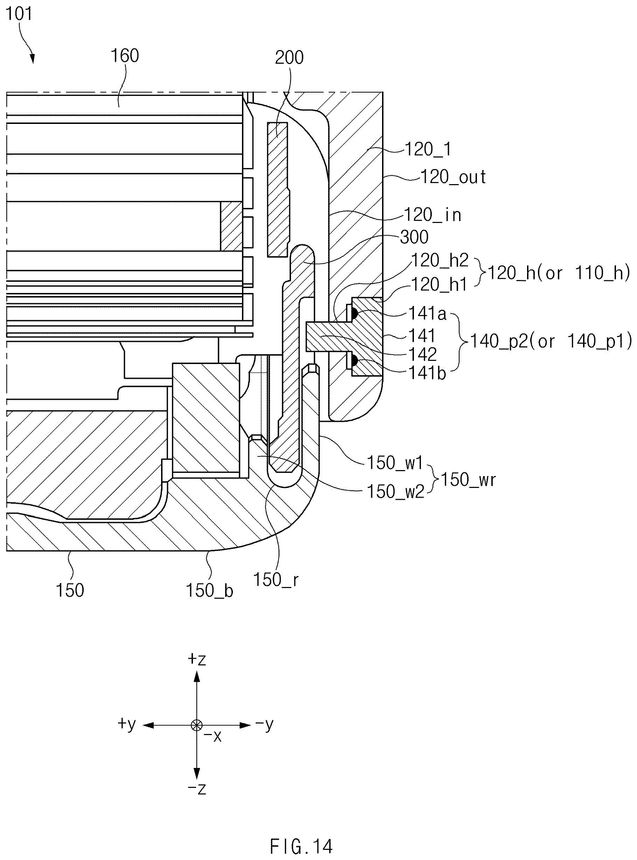

FIG. 13 is a view illustrating a first modified example of a hinge housing and housings of a foldable electronic device according to an embodiment. FIG. 14 is a view illustrating an example of a cross-section, taken along cutting line A1-A1' of FIG. 13.

Referring to FIGS. 1 to 14, a foldable electronic device or a first modified foldable electronic device 101 according to an embodiment may include, for example, at least a first modified housing 110_1, a second modified housing 120_1, and a hinge housing 150. As an example, the first modified foldable electronic device 101 may include at least one hinge structure 200a, 200b, and 200c that allows the first modified housing 110_1 and the second modified housing 120_1 to be in the folded state or the unfolded state while performing a hinge operation, and may include a first protective member 300 and a first dust prevention part 200 that are disposed on one side of the hinge housing 150. Here, at least one of a structure, a size, and a material of the hinge housing 150, the first protective member 300, and the first dust prevention part 200 may be the same as or similar to those of the hinge housing 150, the first protective member 300, and the first dust prevention part 200 described above. For example, the hinge housing 150 may include a hinge housing body 150b and a first hinge housing sidewall 150_wr. The first hinge housing sidewall 150_wr may include sub-sidewalls 150_w1 and 150_w2, and a first member accommodation part 150_r defined by the sub-sidewalls 150_w1 and 150_w2 that are spaced apart from each other at a specific interval. At least a portion of the first protective member 300 may be seated in the first member accommodation part 150_r.

At least one of a structure, a size, and a material of the first modified housing 110_1 and the second modified housing 120_1 may be formed to be the same as or similar to those of the housings 110 and 120 described above, except for protruding structures 140_p1 and 140_p2, respectively. As an example, the first modified housing 110_1 may include a first protruding structure 140_p1, and the second modified housing 120_1 may include a second protruding structure 140_p2. Additionally or alternatively, the first modified housing 110_1 and the second modified housing 120_1 may include housing holes, in which the first protruding structure 140_p1 and the second protruding structure 140_p2 may be seated, respectively.

According to an embodiment, the second modified housing 120_1 may have a structure, in which it is coupled to the second modified housing 120_1 after the second protrusion 120_p described above with reference to FIGS. 3 and 4 is provided as a separate structure. The first modified housing 110_1 may have a structure and a size that are the same as those of the second modified housing 120_1.

According to an embodiment, the second modified housing 120_1 may have a housing hole 120_h (or a through-hole that passes from the -y axis in the y-axis direction), which passes from the second housing outer surface 120_out (or an outer surface of at least one of the fourth sidewall 120a and the sixth sidewall 120c) to a second housing inner surface 120_in (or an inner surface of at least one of the fourth sidewall 120a and the sixth sidewall 120c). When the first modified foldable electronic device 101 is in the folded state, the housing hole 120_h may include, for example, a first housing hole 120_h1 and a second housing hole 120_h2. The first housing hole 120_h1 may have a first depth from the second housing outer surface 120_out toward the second housing inner surface 120_in, and a size thereof in a z-axis cross-section may be a first size. At least a portion of the second housing hole 120_h2 may be connected to the first housing hole 120_h1, and may have a second depth from a portion (e.g., a y-axis direction of the first housing hole 120_h1) of the second modified housing 120_1 toward the second housing inner surface 120_in, and a size thereof in the z-axis cross-section may be a second size. The first depth may be greater than or equal to the second depth. The first size may be greater than or equal to the second size. According to an embodiment, the first housing hole 120_h1 and the second housing hole 120_h2 may have the same center. According to an embodiment, the housing hole 120_h may be formed to pass through an inner surface 120_in (or an inner surface of the first housing) from an outer surface 120_out (or an outer surface of the first housing), and may be formed in multiple steps (or in a stepped shape or a step shape). According to an embodiment, a size of an opening of the housing hole 120_h may be changed while it passes through the inner surface 120_in (or an inner surface of the first housing) from the outer surface 120_out (or an outer surface of the first housing) of the second housing.

The first modified foldable electronic device 101 may include a second protruding structure 140_p2 that is disposed to further protrude in the y-axis direction than the second housing inner surface 120_in while being seated in the housing hole 120_h. According to an embodiment, at least one of a structure, a size, and a material of the first protruding structure 140_p1 may be the same as that of the second protruding structure 140_p2.

The second protruding structure 140_p2 may be inserted from the second housing outer surface 120_out toward the second housing inner surface 120_in through the housing hole 120_h, and may further protrude toward the first protective member 300 than surroundings of the second housing inner surface 120_in. According to an embodiment, the second protruding structure 140_p2 may include a first support structure 141 (or a first part) that is seated in the first housing hole 120_h1, and a first protruding part 142 (or a second part or an extending part) that is disposed to further protrude toward the first protective member 300 (or toward the display 160 or in a central direction of the second modified housing 120_1) than surroundings of the second housing inner surface 120_in while passing through the second housing hole 120_h2 with a portion thereof being seated in the second housing hole 120_h2. The first support structure 141 and the first protruding part 142 may have a continuous structure. The first protruding part 142 may protrude in a direction that is parallel to a folding axis along which the display 160 is folded. The second protruding structure 140_p2 may have, for example, a T shape that is rotated 90 degrees to the right side in a cross-section in the z-axis direction. The second protruding structure 140_p2 (or the first protruding structure 140_p1) may have the same material (e.g., a metallic material or an elastic material) as that of the second modified housing 120_1 or the hinge housing 150. The first modified housing 110_1 may be rotated about a first rotation axis 110_ax corresponding to a center of the first protruding structure 140_p1, and the second modified housing 120_1 may be rotated about a second rotation axis 120_ax corresponding to a center of the second protruding structure 140_p2.

According to an embodiment, the first modified foldable electronic device 101 may include packing members 141a and 141b that are disposed in a bottom part of the first housing hole 120_h1 or a peripheral part that defines the second housing hole 120_h2. The packing members 141a and 141b may be disposed, as an example, between the first support structure 141 of the second protruding structure 140_p2 and a bottom surface of the first housing hole 120_h1. At least a portion of the packing members 141a and 141b may be formed of an elastic material or a rubber material. In the illustrated drawing, two packing members 141a and 141b are illustrated as being disposed, but the first packing member 141a and the second packing member 141b may be included in a continuous ring shape. By the packing members 141a and 141b, introduction of foreign substances through an area, in which the second protruding structure 140_p2 is disposed, may be prevented or reduced. The packing members 141a and 141b may correspond to a portion of the second protruding structure 140_p2. Alternatively, the packing members 141a and 141b may be separate independent components from the second protruding structure 140_p2.

The first protective member 300 may include a protection body, a first recess, and a second recess, as described above in FIGS. 3 and 4. The first protective member 300 may have the same or a similar structure as that of the protective member described in FIG. 4. According to an embodiment, when shapes of the protruding structures 140_p1 and 140_p2 are changed, shapes of the first recess and the second recess may be changed. For example, when cross-sectional shapes of the protruding structures 140_p1 and 140_p2 in the z-axis direction are polygonal or elliptical, shapes of the first recess and the second recess of the first protective member 300 may be polygonal or elliptical. Sizes of the first recess and the second recess of the first protective member 300 may be formed to be the same as or greater than a size of a portion that protrudes from the second housing inner surface 120_in of the protruding structures 140_p1 and 140_p2 in the z-axis cross-section. According to an embodiment, the first modified foldable electronic device 101 may further include an adhesive member (or an adhesive material or an adhesive layer) between the first and second protruding structures 140_p1 and 140_p2 and at least a portion of the modified housing that defines the housing hole.

According to the above-described first modified foldable electronic device 101, the modified housings 110_1 and 120_1 may be machined through a simpler machining process by employing a structure that is coupled to the modified housings 110_1 and 120_1 after the first and second protruding structures 140_p1 and 140_p2 are separately provided. Additionally, introduction of foreign substances from the outside may be blocked through the packing members 141a and 141b (or a single packing member). According to an embodiment, because T-cut machining is not applied in a process of implementing protrusions on inner surfaces of the modified housings 110_1 and 120_1, a thickness of the housings may be sufficiently secured, so that rigidity according to design may be easily secured. According to the first modified foldable electronic device 101, by simplifying inner and outer surfaces of the modified housings 110_1 and 120_1 and separately providing the protruding structures 140_p1 and 140_p2, the electronic device may be easily assembled, and rigidity of an assembly target may be easily maintained and secured by reducing (or slimming) an assembling counterpart (e.g., a protective cap) for securing rotation spaces of the modified housings 110_1 and 120_1 (e.g., a process of removing at least a portion of the assembling counterpart).

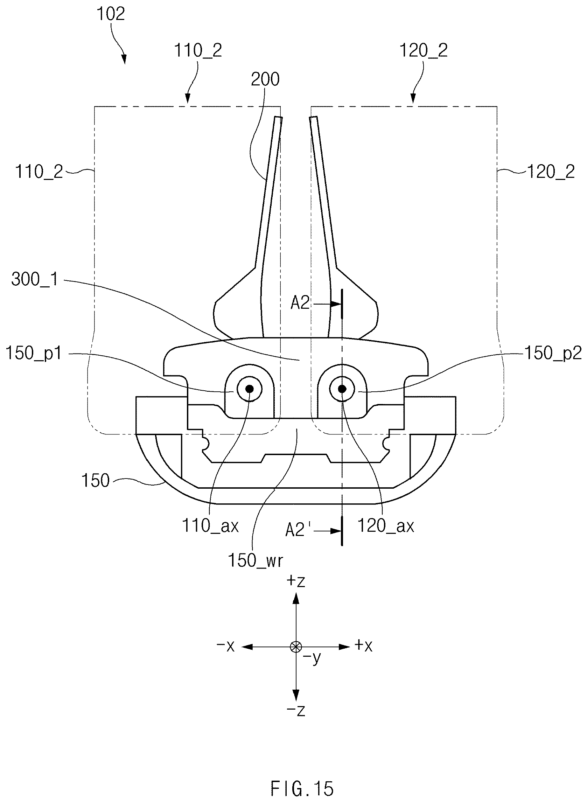

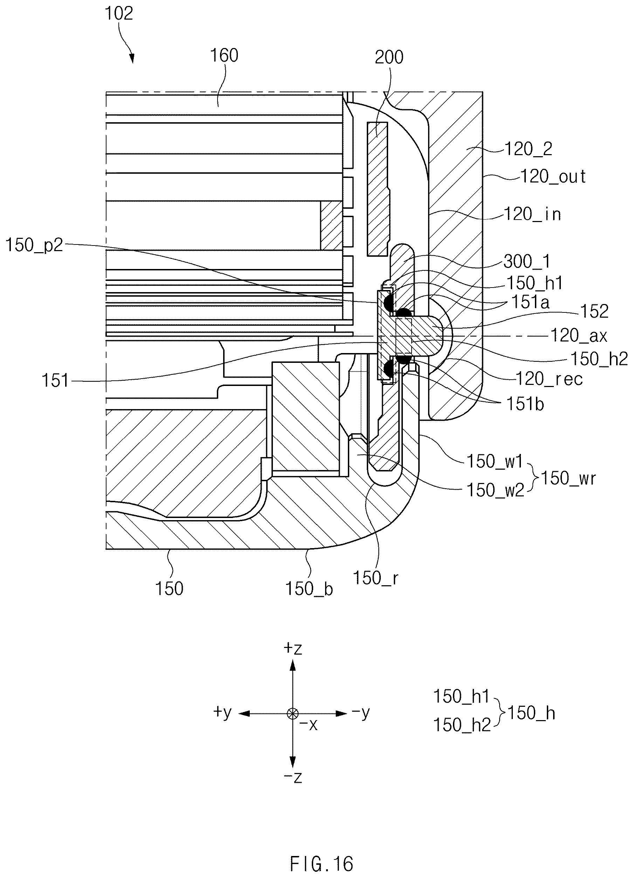

FIG. 15 is a view illustrating a second modified example of a hinge housing and housings of a foldable electronic device according to an embodiment. FIG. 16 is a view illustrating an example of a cross-section, taken along cutting line A2-A2' of FIG. 15.

Referring to FIGS. 1 to 16, a foldable electronic device or a second modified foldable electronic device 102 according to an embodiment may include, for example, at least a third modified housing 110_2, a fourth modified housing 120_2, and a hinge housing 150. As an example, the second modified foldable electronic device 102 may include at least one hinge structure 200a, 200b, and 200c that allows the third modified housing 110_2 and the fourth modified housing 120_2 to be in the folded state or the unfolded state while performing a hinge operation, and may include a modified protective member 300_1 (or a protective member) and a first dust prevention part 200 that are disposed on one side of the hinge housing 150. Here, at least one of a structure, a size, and a material of the hinge housing 150 and the first dust prevention part 200 may be the same as or similar to those of the hinge housing 150 and the first dust prevention part 200 described above. For example, the hinge housing 150 may include a hinge housing body 150b and a first hinge housing sidewall 150_wr. The first hinge housing sidewall 150_wr may include sub-sidewalls 150_w1 and 150_w2, and a first member accommodation part 150_r defined by the sub-sidewalls 150_wl and 150_w2 that are spaced apart from each other at a specific interval. At least a portion of the modified protective member 300_1 may be seated in the first member accommodation part 150_r.

Recesses, in which a third protruding structure 150_p1 and a fourth protruding structure 150_p2 may be held, may be disposed in the third modified housing 110_2 and the fourth modified housing 120_2, respectively. According to an embodiment, the fourth modified housing 120_2 may include an outer surface 120_out that is viewed from the outside and an inner surface 120_in that is not viewed from the outside, and a recess 120_rec (e.g., a T-cutting recess), in which at least a portion of the fourth protruding structure 150_p2 may be held, may be formed on the inner surface 120_in. The recess 120_rec may include a shape that is engraved by a specific depth from the inner surface 120_in toward the outer surface 120_out of the fourth modified housing 120_2. The shape of the recess 120_rec may include a shape corresponding to at least a partial shape of a tip end of the fourth protruding structure 150_p2. The third modified housing 110_2 may have the same or a similar structure as that of the fourth modified housing 120_2. As an example, a recess, in which at least a portion of the third protruding structure 150_p1 may be seated, may be formed on an inner surface of the third modified housing 110_2, and the recess formed on the inner surface of the third modified housing 110_2 may have the same or a similar shape as that of the recess 120_rec formed on the inner surface 120_in of the fourth modified housing 120_2.

The modified protective member 300_1 may include a portion that is accommodated in the first member accommodation part 150_r of the hinge housing 150, and the remaining portion that protrudes toward the display 160. The modified protective member 300_1 may include a member hole 150_h that is formed from the y-axis direction in the -y-axis direction (a direction from an inner surface 120_in of the fourth modified housing 120_2 toward the outer surface 120_out). A shape (or at least a partial shape of the modified protective member 300_1 that defines the member hole 150_h) of the member hole 150_h may include a shape, of which a size of the hole is changed as it goes from the y-axis direction in the -y-axis direction (or a direction from the inner surface 120_in of the fourth modified housing 120_2 (or the third modified housing 110_2) toward the outer surface 120_out). According to an embodiment, the member hole 150_h may be formed in multiple steps (or in a stepped shape or a step shape). According to an embodiment, the member hole 150_h may include a first member hole 150_h1, of which a size of a z-axis cross-section is a third size, and a second member hole 150_h2, of which a size of a z-axis cross-section is a fourth size. According to an embodiment, the third size may be greater than the fourth size. According to an embodiment, a depth of the first member hole 150_h1 may be smaller than a depth of the second member hole 150_h2. Alternatively, a depth of the second member hole 150_h2 may be greater than a depth of the first member hole 150_h1. The second member hole 150_h2 may be connected to the first member hole 150_h1, and the first member hole 150_h1 and the second member hole 150_h2 may have the same center point. At least a portion of the fourth protruding structure 150_p2 may be inserted into and fixed to the member hole 150_h. According to an embodiment, the modified protective member 300_1 may include a plurality of member holes (e.g., two member holes), and the third protruding structure 150_p1 and the fourth protruding structure 150_p2 may be disposed to pass through the plurality of member holes, respectively.

The fourth protruding structure 150_p2 may have a structure that protrudes toward the fourth modified housing 120_2 while being disposed in the member hole 150_h. As an example, the fourth protruding structure 150_p2 may include a second support structure 151 that is seated in the first member hole 150_h1, and a second protruding part 152 (or an extending part) that further protrudes toward the fourth modified housing 120_2 than the second member hole 150_h2 while being seated in the second member hole 150_h2. The second support structure 151 and the second protruding part 152 may be integrally formed. A shape of a z-axis cross-section of the fourth protruding structure 150_p2 may have a T shape that is rotated 90 degrees to the left side. The fourth protruding structure 150_p2 may be formed of the same material as that of the modified protective member 300_1. Alternatively, the fourth protruding structure 150_p2 may be formed of the same material as that of the fourth modified housing 120_2 (or the hinge housing 150). According to an embodiment, the fourth protruding structure 150_p2 may be formed of an elastic material (e.g., a polymer, rubber, or plastic). Alternatively, the fourth protruding structure 150_p2 may be formed of a metallic material that has elasticity of a specific magnitude. The second modified foldable electronic device 102 may further include at least one packing member 151a and 151b. For example, the second modified foldable electronic device 102 may further include a first packing member 151a that is disposed between an inner wall of the modified protective member 300_1 that defines the first member hole 150_h1 and the second support structure 151, and a second packing member 151b that is disposed between an inner wall of the modified protective member 300_1 that defines the second member hole 150_h2 and the second protruding part 152. According to an embodiment, the third protruding structure 150_p1 may have the same or a similar structure and material as that of the above-described fourth protruding structure 150_p2.

According to an embodiment, the second modified foldable electronic device 102 may include an adhesive member (or an adhesive material or an adhesive layer) in at least a partial area between the third and fourth protruding structures 150_p1 and 150_p2 and the modified protective member 300_1 that defines the member hole 150_h.

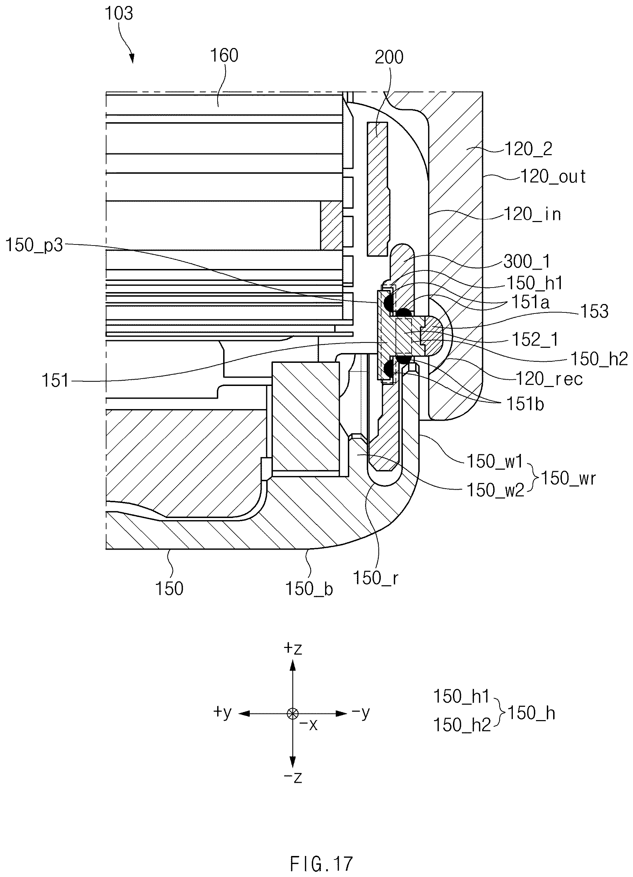

FIG. 17 is a view illustrating a third modified example of a hinge housing and housings of a foldable electronic device according to an embodiment.

Referring to FIGS. 1 to 17, a foldable electronic device or a third modified foldable electronic device 103 according to an embodiment may include at least a third modified housing 110_2, a fourth modified housing 120_2, and a hinge housing 150, and may further include a fifth protruding structure 150_p3 that is disposed at one side of the hinge housing 150.

According to an embodiment, the above-described third modified foldable electronic device 103 may include at least one hinge structure 200a, 200b, and 200c that allows the third modified housing 110_2 and the fourth modified housing 120_2 to be in the folded state or the unfolded state while performing a hinge operation, and may include a modified protective member and a first dust prevention part 200 that are disposed on one side of the hinge housing 150. Here, at least one of a structure, a size, and a material of the third modified housing 110_2, the fourth modified housing 120_2, the hinge housing 150, the modified protective member 300_1, and the first dust prevention part 200 may be the same as or similar to those of the components described in FIG. 16. For example, the hinge housing 150 may include a hinge housing body 150b and a first hinge housing sidewall 150_wr. The first hinge housing sidewall 150_wr may include sub-sidewalls 150_w1 and 150_w2, and a first member accommodation part 150_r defined by the sub-sidewalls 150_wl and 150_w2 that are spaced apart from each other at a specific interval. At least a portion of the modified protective member 300_1 may be seated in the first member accommodation part 150_r.

The modified protective member may include a member hole 150_h that is formed in multiple steps, and the member hole 150_h may include a first member hole 150_h1 and a second member hole 150_h2. The above-described member hole 150_h (or the first member hole 150_h1 and the second member hole 150_h2) may have the same structure as that of the member hole 150_h described in FIG. 16. According to an embodiment, the modified protective member may include a plurality of member holes (e.g., two member holes).

The fifth protruding structure 150_p3 may have a structure that protrudes toward the fourth modified housing 120_2 while being disposed in the member hole 150_h. As an example, the fifth protruding structure 150_p3 may include a second support structure 151 that is seated in the first member hole 150_h1, a second modified protruding part 152_1 that is seated in the second member hole 150_h2, and a tip end holding part 153 that is connected to the second modified protruding part 152_1 and further protrudes in the -y-axis direction (or toward the fourth modified housing 120_2) than one surface (e.g., a surface that faces the -y axis) of the modified protective member 300_1. The second support structure 151 and the second modified protruding part 152_1 may be integrally formed. The second modified protruding part 152_1 and the tip end holding part 153 may be integrally formed while being formed of different materials. According to an embodiment, the second modified protruding part 152_1 may be formed of an elastic material (e.g., at least one of rubber, plastic, or polymer), and the tip end holding part 153 may be formed of a different material (e.g., a metallic material) from that of the second modified protruding part 152_1. As an example, the tip end holding part 153 may be held in the recess 120_rec of the fourth modified housing 120_2.

According to an embodiment, the third modified foldable electronic device 103 may further include an adhesive member (or an adhesive material or an adhesive layer) in at least a partial area between the fifth protruding structure 150_p3 and the modified protective member 300_1 that defines the member hole 150_h.

According to an embodiment, the third modified foldable electronic device 103 may further include at least one packing member 151a and 151b. For example, the second modified foldable electronic device 102 may further include a first packing member 151a that is disposed between an inner wall of the modified protective member 300_1 that defines the first member hole 150_h1 and the second support structure 151, and a second packing member 151b that is disposed between an inner wall of the modified protective member 300_1 that defines the second member hole 150_h2 and the second modified protruding part 152_1. Although one fifth protruding structure 150_p3 has been described in the above description, the third modified foldable electronic device 103 may further include another fifth protruding structure, in which a tip end holding part is held in a recess of the third modified housing 110_2, together with a structure that is held in a recess of the fourth modified housing 120_2. The above-described third modified foldable electronic device 103 may alleviate generation of scratches due to collision of inner surfaces of the modified housings 110_2 and 120_2 and the protruding structures, and may reinforce rigidity of the tip end holding part 153.

As described above, a foldable electronic device according to an embodiment of the disclosure may be provided with a protrusion or a protruding structure in at least one of the housings (or modified housings) and the protective member (or a modified protective member) so that the housings and the hinge housing may directly or indirectly at least partially overlap each other when viewed from the z-axis direction in the folded state, whereby damage to an internal structure may be prevented (or improved) by preventing or reducing chances of the hinge housing from entering insides of the housings even when an external impact occurs, and deformation of inner and outer portions of the foldable electronic device may be prevented or reduced (or improved).

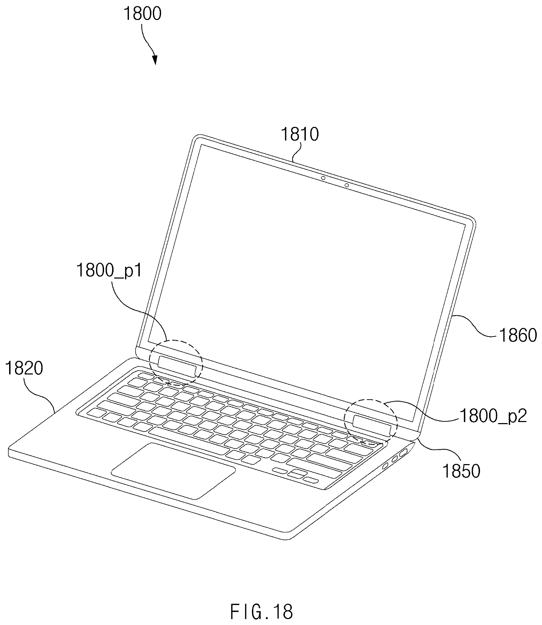

FIG. 18 is a view illustrating an example of another form of a foldable electronic device according to an embodiment.

Referring to FIG. 18, a foldable electronic device 1800 according to an embodiment may include a first housing 1810, in which a display 1860 is disposed, a second housing 1820, in which an input module is disposed, and a hinge housing 1850, in which at least one hinge structure is disposed, and the area, in which the hinge housing 1850 is disposed, may include structures 1800_p1 and 1800_p2 including at least one of the protrusion and the protruding structure described above in FIGS. 1 to 17.

According to an embodiment, the first housing 1810 and the second housing 1820 may be coupled to each other by at least one hinge structure, and at least a portion of the hinge structure may be seated in the hinge housing 1850. The hinge housing 1850 may include, for example, the hinge housing 150 described above in FIG. 2, and a first structure 1800_p1 and a second structure 1800_p2 may be disposed at opposite-side peripheries of the hinge housing 1850. At least one of the first structure 1800_p1 and the second structure 1800_p2 may correspond to any one of the protrusion or the protruding structure described above in FIGS. 1 to 17.

As described above, because the structures 1800_p1 and 1800_p2 described in the disclosure are disposed in the notebook-type foldable electronic device 1800 according to an embodiment, the hinge housing 1850 may be prevented from entering insides of the first and second housings 1810 and 1820 even when an external impact is applied to the hinge housing 1850, so that the notebook-type foldable electronic device 1800 may alleviate or prevent or reduce damage to an internal structure disposed inside the first and second housings 1810 and 1820.

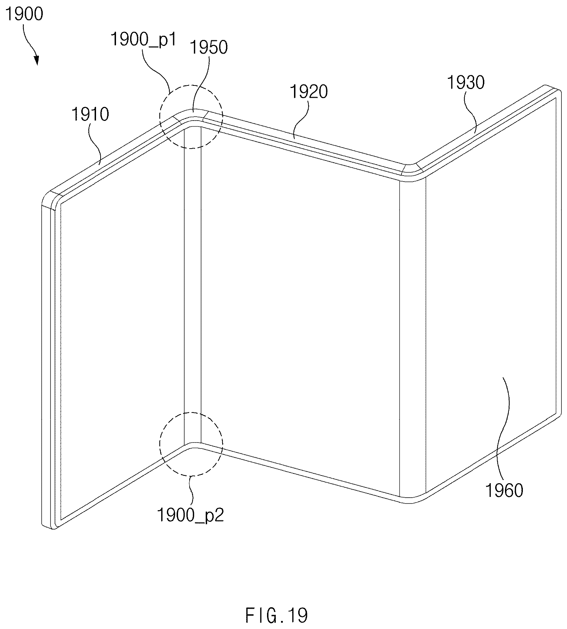

FIG. 19 is a view illustrating an example of still another form of a foldable electronic device according to an embodiment.

Referring to FIG. 19, a foldable electronic device 1900 according to an embodiment may include a plurality of housings 1910, 1920, and 1930, in which a plurality of continuous displays 1960 (or one foldable display) are disposed, at least one hinge structure disposed in a foldable area, and at least one hinge housing 1950 in which the hinge structure is disposed, and the area, in which the hinge housing 1950 is disposed, may include structures 1900_p1 and 1900_p2 including at least one of the protrusion and the protruding structure described above in FIGS. 1 to 17.

According to an embodiment, a first housing 1910 and a second housing 1920 may be coupled to each other by at least one first-type hinge structure comprising a hinge, and the second housing 1920 and the third housing 1930 may be coupled to each other by at least one second-type hinge structure. According to an embodiment, at least a portion of the first-type hinge structures may be seated in the hinge housing 1950. The hinge housing 1950 may include, for example, the hinge housing 150 described above in FIG. 2, and a first structure 1900_p1 and a second structure 1900_p2 may be disposed at opposite-side peripheries of the hinge housing 1950. At least one of the first structure 1900_p1 and the second structure 1900_p2 may correspond to any one of the protrusion or the protruding structure described above in FIGS. 1 to 17.

As described above, because the structures 1900_p1 and 1900_p2 described in the disclosure are disposed in the plurality of in-folding and out-folding type foldable electronic devices 1900 according to an embodiment, the hinge housing 1950 may be prevented from entering insides of the first and second housings 1910 and 1920 even when an external impact is applied to the hinge housing 1950, so that the in-folding and out-folding type foldable electronic device 1900 may alleviate or prevent/reduce damage to an internal structure disposed inside the first and second housings 1910 and 1920.

Meanwhile, in the above description, an example has been illustrated in which protruding structures are disposed on both of the two foldable housings, but the disclosure is not limited thereto. According to an embodiment, a protruding structure (or a protrusion) may be formed only in the first housing (or one of the modified housings), and a separate protruding structure (or a protrusion) may not be formed in the second housing (or the other one of the modified housings).

In addition, in the above description, an example in which the same protruding structures (or protrusions) are formed in the housings, respectively, has been presented, but the disclosure is not limited thereto. For example, protruding structures formed in the first housing and the second housing (or in the modified housings) may be different from each other. As an example, at least one of the protrusion of the foldable electronic device 100 described in FIGS. 3 to 12, the first-type protruding structure of the first modified foldable electronic device 101 described in FIGS. 13 and 14, the second-type protruding structure of the second modified foldable electronic device 102 described in FIGS. 15 and 16, and the third-type protruding structure of the third modified foldable electronic device 103 described in FIG. 17 may be all applied to one foldable electronic device, or only a partial structure thereof may be applied to one foldable electronic device. Alternatively, according to an embodiment, in one foldable electronic device, different types of protruding structures (or protrusions) may be applied to one housing (e.g., the first housing). Alternatively, according to an embodiment, in one foldable electronic device, different types of protruding structures (or protrusions) may be applied to different housings (e.g., the first housing and the second housing). As described above, the protrusion or various types of protruding structures of the disclosure are not limited to being applied to the foldable electronic device illustrated in specific drawings, but may be applied to foldable electronic devices in various forms. According to various embodiments, the protective member may be integrated with the hinge housing sidewall. In this case, recesses of the protective member may correspond to recesses formed in the hinge housing sidewall.

When the protective member is integrated with the hinge housing sidewall, at least a portion of the hinge housing sidewall may correspond to a protective member area, and thus, a component of at least one of the first housing and the second housing may include a protruding structure that is coupled to or held on the hinge housing sidewall. Additionally or alternatively, in the description of the above embodiments, the structure, in which a dust prevention part is disposed, has been mentioned, but in each of the embodiments, a configuration of the dust prevention part may be removed, and the protective member may replace at least a portion of a role of the dust prevention part. Alternatively, in at least one of the above embodiments, configurations of both the protective member and the dust prevention part may be excluded. In this way, in at least some of the embodiments, the protective member and the dust prevention part may not be essential components, but may be components that may be additionally included or excluded according to deformation of the hinge housing or an intention or selection of a designer. Dust prevention parts herein may prevent or reduce dust.

As described above, a foldable electronic device according to an embodiment may include a first housing, a second housing, at least one hinge structure that connects the first housing and the second housing, a flexible display positioned on the first housing, the second housing, and the at least one hinge structure, and a hinge housing on which at least a portion of the at least one hinge structure is seated, and the first housing may include a first protruding structure, at least a portion of which overlaps one side of the hinge housing with respect to a first direction that faces the hinge housing when the foldable electronic device is in a folded state.

According to an embodiment, the first protruding structure protrudes from an inner surface of the first housing toward the hinge housing and is disposed on an upper end of the hinge housing when the foldable electronic device is in the folded state.

According to an embodiment, when the foldable electronic device is in an unfolded state, a center point of an inner curved surface of the first housing, which contacts (or faces) a rear surface of the hinge housing, coincides with a center point of the first protruding structure.

According to an embodiment, the hinge housing includes a hinge housing body that is opened toward the flexible display, on which at least a portion of the at least one hinge structure is seated, and of which at least a portion of a cross-section in a first direction includes a curve, and a first hinge housing sidewall and a second hinge housing sidewall that are formed at opposite-side peripheries of the hinge housing body, and the foldable electronic device further includes a protective member that is held on the first hinge housing sidewall, and the protective member includes a first recess, in which at least a portion of the first protruding structure is seated.

According to an embodiment, the first housing includes a housing hole that passes from an outer surface toward an inner surface of the first housing, and the first protruding structure is inserted into the housing hole from the outer surface of the first housing and protrudes toward the first hinge housing sidewall.

According to an embodiment, the foldable electronic device further includes at least one of an adhesive member that is disposed in at least a partial area between the first protruding structure and a peripheral part that defines the housing hole, and a packing member that is disposed in at least a partial area between the peripheral part that defines the housing hole and the first protruding structure.

According to an embodiment, a size of an opening of the housing hole is changed as it goes from an outskirt toward the inner surface of the first housing.

According to an embodiment, the housing hole includes a first housing hole having a first size, and a second housing hole that is connected to the first housing hole and has a second size that is smaller than the first size, and the first protruding structure includes a first support structure that is seated in the first housing hole, and a first protruding part, a portion of which is seated in the second housing hole, and that further protrudes toward the hinge housing.

According to an embodiment, a position of a center of the first protruding structure when the foldable electronic device is in the folded state and a position of the center of the first protruding structure when the foldable electronic device in the unfolded state are the same.

According to an embodiment, the second housing includes a second protruding structure, at least a portion of which overlaps an opposite side of the hinge housing with respect to the first direction when the foldable electronic device is in the folded state.

According to an embodiment, the protective member further includes a second recess, in which at least a portion of the second protruding structure is held.

According to an embodiment, the second housing includes a second housing hole that passes from an outer surface toward an inner surface of the second housing, and the second protruding structure is inserted into the second housing hole from the outer surface of the second housing and protrudes toward the second hinge housing sidewall.

According to an embodiment, the foldable electronic device further includes an adhesive member that is disposed in at least a partial area between the second protruding structure and a peripheral part that defines the second housing hole.

According to an embodiment, when the foldable electronic device is in the unfolded state, a center point of an inner curved surface of the second housing, which contacts (or faces) a rear surface of the hinge housing, coincides with a center point of the second protruding structure.

According to an embodiment, a position of a center of the second protruding structure when the foldable electronic device is in the folded state and a position of the center of the second protruding structure when the foldable electronic device in the unfolded state are the same.

As described above, a foldable electronic device according to an embodiment may include a first housing, a second housing, at least one hinge structure that connects the first housing and the second housing, a flexible display positioned on the first housing, the second housing, and the at least one hinge structure, a hinge housing on which at least a portion of the at least one hinge structure is seated, a protective member disposed at at least one of opposite peripheries of the hinge housing, and a first protruding structure that protrudes toward an inner surface of the first housing through a member hole formed in the protective member, and when the foldable electronic device is in a folded state, at least a portion of the first protruding structure overlaps one side of the hinge housing with respect to a first direction that faces the hinge housing.

According to an embodiment, the first housing includes a first recess, in which one end of the first protruding structure is seated.

According to an embodiment, the member hole includes a first member hole having a first size, and a second member hole that has a second size smaller than the first size and is connected to the first member hole, and the first protruding structure includes a second support structure that is seated in the first member hole, and a second protruding part that is connected to the second support structure and has a portion seated in the second member hole.

According to an embodiment, the foldable electronic device further includes at least one of an adhesive member that is disposed in at least a partial area between a peripheral part that defines the member hole and the first protruding structure, and a packing member that is disposed in at least a partial area between the peripheral part that defines the member hole and the first protruding structure.

According to an embodiment, the second protruding part includes a first part that is seated in the second member hole, and a second part that is connected to the first part, protrudes from the second member hole toward the first housing, and is formed of a different material from that of the first part.

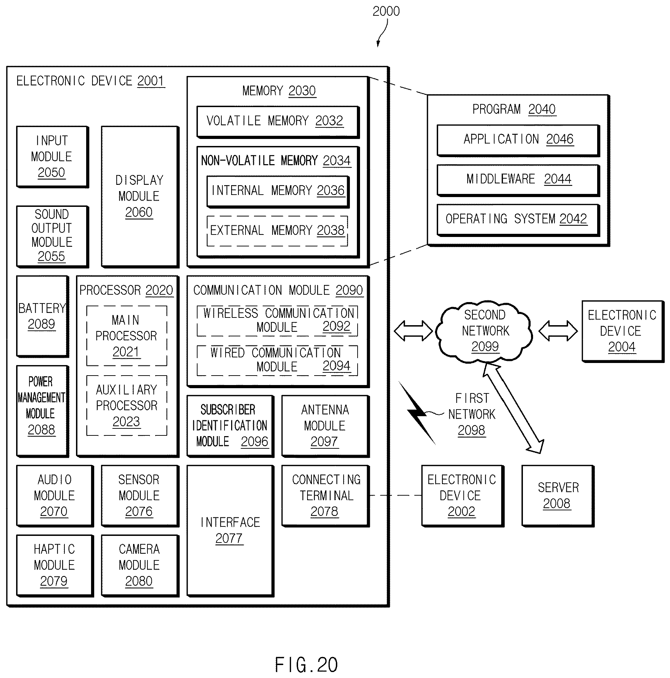

Fig. 20 is a block diagram illustrating an electronic device 2001 in a network environment 2000 according to various embodiments.

Referring to Fig. 20, the electronic device 2001 in the network environment 2000 may communicate with an electronic device 2002 via a first network 2098 (e.g., a short-range wireless communication network), or at least one of an electronic device 2004 or a server 2008 via a second network 2099 (e.g., a long-range wireless communication network). According to an embodiment, the electronic device 2001 may communicate with the electronic device 2004 via the server 2008. According to an embodiment, the electronic device 2001 may include a processor 2020 comprising processing circuitry, memory 2030, an input module 2050, a sound output module 2055, a display module 2060, an audio module 2070, a sensor module 2076, an interface 2077, a connecting terminal 2078, a haptic module 2079, a camera module 2080, a power management module 2088, a battery 2089, a communication module 2090, a subscriber identification module(SIM) 2096, or an antenna module 2097. In some embodiments, at least one of the components (e.g., the connecting terminal 2078) may be omitted from the electronic device 2001, or one or more other components may be added in the electronic device 2001. In some embodiments, some of the components (e.g., the sensor module 2076, the camera module 2080, or the antenna module 2097) may be implemented as a single component (e.g., the display module 2060).

The processor 2020 may execute, for example, software (e.g., a program 2040) to control at least one other component (e.g., a hardware or software component) of the electronic device 2001 coupled with the processor 2020, and may perform various data processing or computation. According to an embodiment, as at least part of the data processing or computation, the processor 2020 may store a command or data received from another component (e.g., the sensor module 2076 or the communication module 2090) in volatile memory 2032, process the command or the data stored in the volatile memory 2032, and store resulting data in non-volatile memory 2034. According to an embodiment, the processor 2020 may include a main processor 2021 comprising processing circuitry (e.g., a central processing unit (CPU) or an application processor (AP)), or an auxiliary processor 2023 (e.g., a graphics processing unit (GPU), a neural processing unit (NPU), an image signal processor (ISP), a sensor hub processor, or a communication processor (CP)) that is operable independently from, or in conjunction with, the main processor 2021. For example, when the electronic device 2001 includes the main processor 2021 and the auxiliary processor 2023, the auxiliary processor 2023 may be adapted to consume less power than the main processor 2021, or to be specific to a specified function. The auxiliary processor 2023, comprising processing circuitry, may be implemented as separate from, or as part of the main processor 2021.

The auxiliary processor 2023 may control at least some of functions or states related to at least one component (e.g., the display module 2060, the sensor module 2076, or the communication module 2090) among the components of the electronic device 2001, instead of the main processor 2021 while the main processor 2021 is in an inactive (e.g., sleep) state, or together with the main processor 2021 while the main processor 2021 is in an active state (e.g., executing an application). According to an embodiment, the auxiliary processor 2023 (e.g., an image signal processor or a communication processor) may be implemented as part of another component (e.g., the camera module 2080 or the communication module 2090) functionally related to the auxiliary processor 2023. According to an embodiment, the auxiliary processor 2023 (e.g., the neural processing unit) may include a hardware structure specified for artificial intelligence model processing. An artificial intelligence model may be generated by machine learning. Such learning may be performed, e.g., by the electronic device 2001 where the artificial intelligence is performed or via a separate server (e.g., the server 2008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2030 may store various data used by at least one component (e.g., the processor 2020 or the sensor module 2076) of the electronic device 2001. The various data may include, for example, software (e.g., the program 2040) and input data or output data for a command related thererto. The memory 2030 may include the volatile memory 2032 or the non-volatile memory 2034.

The program 2040 may be stored in the memory 2030 as software, and may include, for example, an operating system (OS) 2042, middleware 2044, or an application 2046.

The input module 2050 may receive a command or data to be used by another component (e.g., the processor 2020) of the electronic device 2001, from the outside (e.g., a user) of the electronic device 2001. The input module 2050 may include, for example, a microphone, a mouse, a keyboard, a key (e.g., a button), or a digital pen (e.g., a stylus pen).

The sound output module 2055 may output sound signals to the outside of the electronic device 2001. The sound output module 2055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2060 may visually provide information to the outside (e.g., a user) of the electronic device 2001. The display module 2060 may include, for example, a display, a hologram device, or a projector and control circuitry to control a corresponding one of the display, hologram device, and projector. According to an embodiment, the display module 2060 may include a touch sensor adapted to detect a touch, or a pressure sensor adapted to measure the intensity of force incurred by the touch.

The audio module 2070 may convert a sound into an electrical signal and vice versa. According to an embodiment, the audio module 2070 may obtain the sound via the input module 2050, or output the sound via the sound output module 2055 or a headphone of an external electronic device (e.g., an electronic device 2002) directly (e.g., wiredly) or wirelessly coupled with the electronic device 2001.

The sensor module 2076 may detect an operational state (e.g., power or temperature) of the electronic device 2001 or an environmental state (e.g., a state of a user) external to the electronic device 2001, and then generate an electrical signal or data value corresponding to the detected state. According to an embodiment, the sensor module 2076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2077 may support one or more specified protocols to be used for the electronic device 2001 to be coupled with the external electronic device (e.g., the electronic device 2002) directly (e.g., wiredly) or wirelessly. According to an embodiment, the interface 2077 may include, for example, a high definition multimedia interface (HDMI), a universal serial bus (USB) interface, a secure digital (SD) card interface, or an audio interface.

A connecting terminal 2078 may include a connector via which the electronic device 2001 may be physically connected with the external electronic device (e.g., the electronic device 2002). According to an embodiment, the connecting terminal 2078 may include, for example, a HDMI connector, a USB connector, a SD card connector, or an audio connector (e.g., a headphone connector).

The haptic module 2079 may convert an electrical signal into a mechanical stimulus (e.g., a vibration or a movement) or electrical stimulus which may be recognized by a user via his tactile sensation or kinesthetic sensation. According to an embodiment, the haptic module 2079 may include, for example, a motor, a piezoelectric element, or an electric stimulator.

The camera module 2080 may capture a still image or moving images. According to an embodiment, the camera module 2080 may include one or more lenses, image sensors, image signal processors, or flashes.

The power management module 2088 may manage power supplied to the electronic device 2001. According to an embodiment, the power management module 2088 may be implemented as at least part of, for example, a power management integrated circuit (PMIC).

The battery 2089 may supply power to at least one component of the electronic device 2001. According to an embodiment, the battery 2089 may include, for example, a primary cell which is not rechargeable, a secondary cell which is rechargeable, or a fuel cell.

The communication module 2090 may support establishing a direct (e.g., wired) communication channel or a wireless communication channel between the electronic device 2001 and the external electronic device (e.g., the electronic device 2002, the electronic device 2004, or the server 2008) and performing communication via the established communication channel. The communication module 2090 may include one or more communication processors that are operable independently from the processor 2020 (e.g., the application processor (AP)) and supports a direct (e.g., wired) communication or a wireless communication. According to an embodiment, the communication module 2090 may include a wireless communication module 2092 (e.g., a cellular communication module, a short-range wireless communication module, or a global navigation satellite system (GNSS) communication module) or a wired communication module 2094 (e.g., a local area network (LAN) communication module or a power line communication (PLC) module). A corresponding one of these communication modules may communicate with the external electronic device via the first network 2098 (e.g., a short-range communication network, such as Bluetooth^{™}, wireless-fidelity (Wi-Fi) direct, or infrared data association (IrDA)) or the second network 2099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2092 may identify and authenticate the electronic device 2001 in a communication network, such as the first network 2098 or the second network 2099, using subscriber information (e.g., international mobile subscriber identity (IMSI)) stored in the subscriber identification module 2096.

The wireless communication module 2092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2092 may support a high-frequency band (e.g., the mmWave band) to achieve, e.g., a high data transmission rate. The wireless communication module 2092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2092 may support various requirements specified in the electronic device 2001, an external electronic device (e.g., the electronic device 2004), or a network system (e.g., the second network 2099). According to an embodiment, the wireless communication module 2092 may support a peak data rate (e.g., 20Gbps or more) for implementing eMBB, loss coverage (e.g., 2064dB or less) for implementing mMTC, or U-plane latency (e.g., 0.5ms or less for each of downlink (DL) and uplink (UL), or a round trip of 20ms or less) for implementing URLLC.

The antenna module 2097 may transmit or receive a signal or power to or from the outside (e.g., the external electronic device) of the electronic device 2001. According to an embodiment, the antenna module 2097 may include an antenna including a radiating element composed of a conductive material or a conductive pattern formed in or on a substrate (e.g., a printed circuit board (PCB)). According to an embodiment, the antenna module 2097 may include a plurality of antennas (e.g., array antennas). In such a case, at least one antenna appropriate for a communication scheme used in the communication network, such as the first network 2098 or the second network 2099, may be selected, for example, by the communication module 2090 (e.g., the wireless communication module 2092) from the plurality of antennas. The signal or the power may then be transmitted or received between the communication module 2090 and the external electronic device via the selected at least one antenna. According to an embodiment, another component (e.g., a radio frequency integrated circuit (RFIC)) other than the radiating element may be additionally formed as part of the antenna module 2097.

According to various embodiments, the antenna module 2097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2001 and the external electronic device 2004 via the server 2008 coupled with the second network 2099. Each of the electronic devices 2002 or 2004 may be a device of a same type as, or a different type, from the electronic device 2001. According to an embodiment, all or some of operations to be executed at the electronic device 2001 may be executed at one or more of the external electronic devices 2002, 2004, or 2008. For example, if the electronic device 2001 should perform a function or a service automatically, or in response to a request from a user or another device, the electronic device 2001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2001. The electronic device 2001 may provide the outcome, with or without further processing of the outcome, as at least part of a reply to the request. To that end, a cloud computing, distributed computing, mobile edge computing (MEC), or client-server computing technology may be used, for example. The electronic device 2001 may provide ultra low-latency services using, e.g., distributed computing or mobile edge computing. In another embodiment, the external electronic device 2004 may include an internet-of-things (IoT) device. The server 2008 may be an intelligent server using machine learning and/or a neural network. According to an embodiment, the external electronic device 2004 or the server 2008 may be included in the second network 2099. The electronic device 2001 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element. Thus, terms such as "connected," "coupled," and "couple" as used herein cover both direct and indirect connections.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC). Thus, each "module" herein may comprise circuitry.

Various embodiments as set forth herein may be implemented as software (e.g., the program 2040) including one or more instructions that are stored in a storage medium (e.g., internal memory 2036 or external memory 2038) that is readable by a machine (e.g., the electronic device 2001). For example, a processor (e.g., the processor 2020) of the machine (e.g., the electronic device 2001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device, comprising:
a first housing;
a second housing;
at least one hinge structure configured to couple the first housing and the second housing;
a flexible display disposed on the first housing, the second housing, and
a hinge housing in which at least a portion of the at least one hinge structure is accommodated;
wherein the first housing comprises:
a first protruding structure overlapping at least a portion of the hinge housing with respect to a first direction toward the hinge housing when the foldable electronic device is in a folded state.

2. The foldable electronic device of claim 1, wherein, when the foldable electronic device is in the folded state, the first protruding structure protrudes from an inner surface of the first housing toward the hinge housing, and is disposed on an upper end of the hinge housing.

3. The foldable electronic device of claim 1, wherein, when the foldable electronic device is in an unfolded state, a center point of an inner curved surface of the first housing facing the rear surface of the hinge housing coincides with a center point of the first protruding structure.

4. The foldable electronic device of claim 1, wherein the hinge housing comprises:
a hinge housing body having an open state toward the flexible display, on which at least a portion of the at least one hinge structure is accommodated, and at least a portion of a cross section in the first direction comprises a curved surface;
a first hinge housing sidewall and a second hinge housing sidewall formed at respective edges of the hinge housing body;
wherein the foldable electronic device further comprises a protection member disposed on the first hinge housing sidewall,
wherein the protective member comprises a first groove in which at least a portion of the first protruding structure is configured to be accommodated.

5. The foldable electronic device of claim 4, wherein the first housing comprises a housing hole passing through an inner surface of the first housing from an outer surface of the first housing,
wherein the first protruding structure is configured to be inserted into the housing hole from the outer surface of the first housing and protrude toward the first hinge housing sidewall.

6. The foldable electronic device of claim 5, further comprises at least one of:
an adhesive member disposed in at least a portion between at least the first protruding structure and a periphery forming the housing hole;
a packing member disposed in at least a portion between at least the first protruding structure and a periphery forming the housing hole.

7. The foldable electronic device of claim 5, wherein a size of the housing hole changes from the outer surface to the inner surface of the first housing.

8. The foldable electronic device of claim 5, wherein the housing hole comprises:
a first housing hole having a first size; and
a second housing hole having a second size smaller than the first size and connected to the first housing hole,
wherein the first protruding structure comprises:
a first support structure accommodated in the first housing hole; and
a first protruding portion protruding toward the hinge housing, wherein at least a portion of the first protruding portion is accommodated in the second housing hole.

9. The foldable electronic device of claim 5, wherein a location of a center of the first protruding structure in the folded state of the foldable electronic device is the same as a location of a center of the first protruding structure in an unfolded state of the foldable electronic device.

10. The foldable electronic device of claim 4, wherein the second housing comprises a second protruding structure overlapping at least a portion of the other side of the hinge housing in the first direction when the foldable electronic device is in the folded state.

11. The foldable electronic device of claim 10, wherein the protection member further comprises a second groove in which at least a portion of the second protruding structure is configured to be accommodated.

12. The foldable electronic device of claim 10, wherein the second housing comprises a second housing hole through an outer surface from an inner surface of the second housing,
wherein the second protruding structure is configured to be inserted into the hole of the second housing on the outer surface of the second housing and protrude toward the second hinge housing sidewall.

13. The foldable electronic device of claim 12, further comprising:
an adhesive member disposed in at least a portion between the second protruding structure and a peripheral portion forming the second housing hole.

14. The foldable electronic device of claim 10, wherein, when the foldable electronic device is in an unfolded state, a center point of an inner curved surface of the second housing facing the rear surface of the hinge housing coincides with a center point of the second protruding structure.

15. The foldable electronic device of claim 10, wherein a position of a center of the second protruding structure in the folded state is the same as a position of a center of the second protruding structure in an unfolded state.
